# EUROPEAN PATENT APPLICATION

(11) **EP 1 600 363 A1**
(43) Date of publication of application: **30.11.2005**
(21) Application number: 05011512.0
(22) Date of filing: 27.05.2005
(51) Int. Cl.: B62D 25/20, B62D 21/15

(54) **Floor panel structure for a vehicle and vehicle body provided therewith**

(30) Priority: 27.05.2004 JP 2004158075
(71) Applicant: Mazda Motor Corporation, Aki-gun, Hiroshima 730-8670 (JP)
(72) Inventor: Sugihara, Tsuyoshi, Aki-gun Hiroshima 730-8670 (JP); Nakabayashi, Seiichi, Aki-gun Hiroshima 730-8670 (JP); Hirabayashi, Shigefumi, Aki-gun Hiroshima 730-8670 (JP)
(74) Representative: Müller-Boré & Partner Patentanwälte

(57) **Abstract**

The panel area S10 is formed in the substantially rectangular shape with sides thereof which extend substantially straight, by being enclosed by the frame member 22, 28, 29 and the vibration restraint portion to control a vibration area, such as beads 56 and the bent line portion 54, and the high-rigidity area 60 and the low-rigidity area 62 are formed within the panel area S10. Accordingly, the vibration energy can be increased at the low-rigidity area 62 properly. As a result, the vibration energy transmitted from the frame members to the floor panel can be reduced, and thereby the acoustic emission generated from the floor panel can be reduced.

## Description

The present invention relates to a floor panel structure for a vehicle body and to a vehicle body provided therewith, particularly to a floor panel structure of a vehicle body in which a floor of an automotive vehicle is formed by a floor panel coupled to a plurality of frame members which extend in substantially longitudinal and width directions of the vehicle body.

It is known that vibration from frame members coupled to the engine or the suspension of the vehicle is transmitted to floor panels and makes the floor panels and air in the cabin vibrate, resulting in uncomfortable vibration and noises being generated in the cabin. Herein, the vibration of engine itself and the road noise from the suspension are considered as vibration resources primarily. The road noise is generally caused by resonance of vehicle tires and sympathetic vibration of the suspension.

Conventionally, damping materials or the like which are applied to the floor panels or the particular portions of the vehicle body have been generally used to suppress such vibration and noises. However, in general a large amount of these materials are required, and thereby the weight of the vehicle body tend to increase improperly. This overweight might cause various disadvantages including an issue of costs.

Meanwhile, in view of facts that frequency of uncomfortable vibration transmitted from the engine and suspension in the automotive vehicle is generally less than 400 Hz and particularly the peak of road noises exists at around 250 Hz which may be caused by the resonance of vehicle tires, it is also known that the peculiar frequency of floor panels is shifted to a high frequency band more than 400 Hz by increasing the rigidity of floor panels by providing many beads formed at the panels or thick panels. Namely, the uncomfortable vibration and noises can be suppressed, by preventing the floor panels from vibrating sympathetically with the suspension or the vehicle tires.

In this case, however, the vibration with relatively high frequency tends to increase improperly. Accordingly, in order to suppress the increased vibration with relatively high frequency at the same time, damping materials or the like which should be useful to such vibration with high frequency will be also required. Accordingly, the same problems as described above occur inevitably.

Meanwhile, Japanese Patent Laid-Open Publication No. 6-107235 discloses a panel structure of a vehicle body in which a panel comprises a plurality of projecting portions with shell structure, which has a strength in bending, compressing and tensioning, and recess portions extending between the projecting portions. Herein, the vibration generated can be increased at the recess portions primarily, and the increased vibration can be reduced properly by damping materials provided at the recess portions.

In generally, various auxiliary parts, seats and the like are generally disposed below or on the floor panel, and the plural frame members are located at limited portions according to the vehicle-body rigidity and structure which may be required. Therefore, it is difficult to form the panel area enclosed by the frame members in appropriate shape, and thus the panel structure disclosed in the above-described publication may not suppress the vibration properly.

Also, having the above-described damping materials provided the entire area of floor panel might cause increases of costs and the vehicle weight inappropriately. Increasing thickness of panel might also increase the vehicle weight as well.

The present invention has been devised in view of the above-described problems, and an object of the present invention is to provide a floor panel structure of a vehicle body which can propedy reduce the vibration energy transmitted from the frame members to the floor panel and thereby reduce the acoustic emission generated from the floor panel.

This object is solved by a floor panel structure for a vehicle body according to the present invention of claim 1 and by a vehicle body according to claim 11. Preferred embodiments of the present invention are subject of the dependent claims.

According to the present invention, there is provided a floor panel structure for a vehicle body, in which a floor of an automotive vehicle is formed by a floor panel coupled to a plurality of frame members which substantially extend in substantially longitudinal and width directions of vehicle, comprising a panel area provided at the floor panel, the panel area being formed by being enclosed by the frame member and/or a vibration restraint portion to control a vibration area, the panel area being formed in a substantially rectangular shape with sides thereof which extend substantially straight, a high-rigidity area formed within the panel area, the high-rigidity area being formed by projecting part of the floor panel substantially upward or downward so as to have a relatively high rigidity, and a low-rigidity area formed within the panel area, the low-rigidity area having a relatively low rigidity, the low-rigidity area being formed at least partly around the high-rigidity area. Preferably the high-rigidity area is about 50 or more times more rigid than the low-rigidity area.

According to this structure, since the high-rigidity area being formed by projecting part of the floor panel upward or downward and the low-rigidity area being formed at least partly around the high-rigidity area are formed within the panel area of the floor panel, the vibration energy can be properly increased at the low-rigidity area due to the difference in rigidity between the high-rigidity area and the low-rigidity area. Also, since the panel area is formed in the substantially rectangular shape with sides thereof which extend substantially straight, the vibration energy can be increased effectively at the low-rigidity area, without increasing the rigidity of the low-rigidity area. Thus, the vibration energy greatly and properly increased at the low-rigidity area is transformed to the heat energy by the damping function of the material which forms the floor panel. As a result, the vibration energy of the panel area can be reduced as a whole, and thereby the acoustic emission generated from the panel area can be reduced.

According to a preferred embodiment of the present invention, a damping material which is placed on the floor panel to reduce the panel vibration energy of the floor panel is at least partly provided substantially at the low-rigidity area. Accordingly, the vibration energy greatly increased at the low-rigidity area can be reduce effectively and intensively by the damping material provided substantially at the low-rigidity area.

According to another preferred embodiment of the present invention, at least one pair of sides of the substantially rectangular panel area is formed substantially in parallel. According to this structure, since at least one pair of sides of the substantially rectangular panel area is in parallel, the vibration reduction effect can be ensured without increasing the rigidity of the panel area improperly.

According to further another preferred embodiment of the present invention, the plural frame members comprise at least a frame member which includes a straight-extending portion and a bent portion, and the bent portions of the frame member is located at a connecting portion of the frame member with another frame member such that the straight-extending portion of the frame member constitutes at least one of the straight sides of the substantially rectangular panel area. According to this structure, since the bent portion of the frame member is located at the connecting portion of the frame member with another frame member, the substantially rectangular panel area can be formed properly by the frame member even if the frame member is bent as a whole.

According to further another preferred embodiment of the present invention, a plurality of the panel area are provided, and the vibration restraint portion is configured so as to control the vibration area by restraining a vibration linkage between vibration occurring at a specified panel area and vibration occurring at another panel area next to the specified panel area. According to this structure, the panel area can be constituted properly and easily by this vibration restraint portion.

According to further another preferred embodiment of the present invention, the above-described vibration restraint portion comprises at least one bead which is formed at the floor panel so as to extend substantially straight. Accordingly, the vibration restraint portion can be constituted properly and easily by the bead extending substantially straight.

According to further another preferred embodiment of the present invention, the above-described frame members comprise at least a frame member which includes a curved portion, and the above-described bead is so located inside and along the curved portion as to constitute at least one of the straight sides of the substantially rectangular panel area. Accordingly, the substantially rectangular panel area can be formed properly by the bead even if the frame member is curved partially.

According to further another preferred embodiment of the present invention, the above-described vibration restraint portion comprises a flange edge portion of a connecting flange of the frame member, the flange edge portion being formed so as to extend substantially straight and be fixed to the floor panel. Accordingly, the vibration restraint portion can be constituted properly and easily by the flange edge portion of the connecting flange of the frame member which extends substantially straight.

According to further another preferred embodiment of the present invention, the above-described plural frame members comprise at least the frame member which includes the curved portion, and the above-described flange edge portion of the connecting flange is so located inside and along the curved portion as to constitute at least one of the straight sides of the substantially rectangular panel area. Accordingly, the substantially rectangular panel area can be formed properly by the flange edge portion of the connecting flange even if the frame member itself is curved partially.

According to further another preferred embodiment of the present invention, the above-described vibration restraint portion comprises a bent line portion of the floor panel, the bent line portion being formed by bending the floor panel with a straight bending line, and the bent line portion of the floor panel constitutes at least one of the straight sides of the substantially rectangular panel area. Accordingly, the vibration restraint portion can be constituted properly and easily by the bent line portion of the floor panel.

According to the invention, there is further provided a vehicle body comprising a floor panel structure according to the invention or a preferred embodiment thereof.

Other features, aspects, and advantages of the present invention will become apparent from the following description which refers to the accompanying drawings. It should be understood that even though embodiments are separately described, single features thereof may be combined to additional embodiments.
FIG. 1 is a perspective view of an underbody of an automotive vehicle equipped with a floor panel structure of a vehicle body according to the first through third embodiments of the present invention.
FIG. 2A is an enlarged plan view of a panel area S2 according to the first embodiment of the present invention, and FIG. 2B is a sectional view taken along line II-II of FIG. 2A, illustrating a sectional structure of the panel area S2 in the vehicle width direction.
FIG. 3A is an enlarged plan view of a panel area S10 according to the first embodiment of the present invention, and FIG. 3B is a sectional view taken along line III-III of FIG. 3A, illustrating a sectional structure of the panel area S10 in the longitudinal direction.
FIG. 4A is an enlarged plan view of a panel area S13 according to the first embodiment of the present invention, and FIG. 4B is a sectional view taken along line IV-IV of FIG. 4A, illustrating a sectional structure of the panel area S13 in the longitudinal direction.
FIG. 5A is an enlarged plan view of a panel area S14 according to the first embodiment of the present invention, and FIG. 5B is a sectional view taken along line V-V of FIG. 5A, illustrating a sectional structure of the panel area S14 in the longitudinal direction.
FIG. 6A and 6B are enlarged plan views of respectively modified panel area S10 according to the first embodiment of the present invention.
FIG. 7A is an enlarged plan view of panel area S1 and S5 according to the second embodiment of the present invention, and FIG. 7B is a sectional view taken along line VII-VII of FIG. 7A, illustrating a sectional structure of the panel area S1 and S5 in the longitudinal direction.
FIG. 8A is an enlarged plan view of panel area S3 and S7 according to the second embodiment of the present invention, and FIG. 8B is a sectional view taken along line VIII-VIII of FIG. 8A, illustrating a sectional structure of the panel area S3 and S7 in the longitudinal direction.
FIG. 9A is an enlarged plan view of panel area S4 and S8 according to the second embodiment of the present invention, and FIG. 9B is a sectional view taken along line IX-IX of FIG. 9A, illustrating a sectional structure of the panel area S4 and S8 in the longitudinal direction.
FIG. 10A is an enlarged plan view of a panel area S11 according to the second embodiment of the present invention, and FIG. 10B is a sectional view taken along line X-X of FIG. 10A, illustrating a sectional structure of the panel area S11 in the longitudinal direction.
FIG. 11A is an enlarged plan view of a panel area S15 according to the second embodiment of the present invention, and FIG. 11B is a sectional view taken along line XI-XI of FIG. 11A, illustrating a sectional structure of the panel area S15 in the longitudinal direction.
FIG. 12A is an enlarged plan view of modified panel area S1 and S5 according to the second embodiment of the present invention, and FIG. 12B is an enlarged plan view of modified panel area S4 and S8 according to the second embodiment of the present invention
FIG. 13A is an enlarged plan view of a panel area S9 according to the third embodiment of the present invention, and FIG. 13B is a sectional view taken along line XIII-XIII of FIG. 13A, illustrating a sectional structure of the panel area S9 in the longitudinal direction.
FIG. 14 is an enlarged plan view of a modified panel area S9 according to the third embodiment of the present invention.
FIG. 15 is an enlarged plan view of another modified panel area S9 according to the third embodiment of the present invention.
FIG. 16 is an enlarged plan view of further another modified panel area S9 according to the third embodiment of the present invention.
FIG. 17A is an enlarged plan view of further another modified panel area S9 according to the third embodiment of the present invention, and FIG. 17B is an enlarged plan view of a modified panel area S10 according to the third embodiment of the present invention.

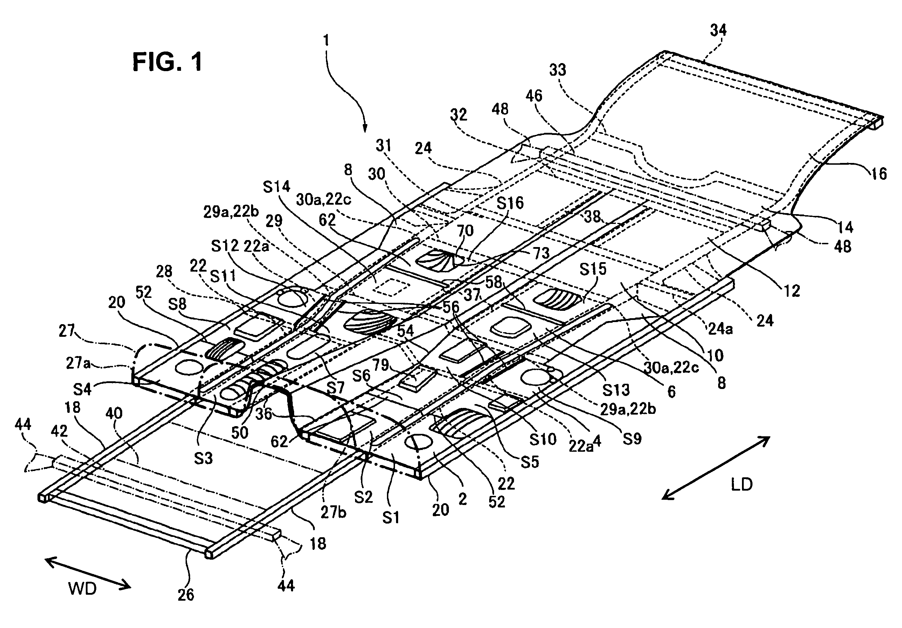

Hereinafter, preferred embodiments of the present invention will be described referring to the accompanying drawings. FIG. 1 is a perspective view of an underbody of an automotive vehicle equipped with a floor panel structure of a vehicle body according to the first, second and third embodiments of the present invention. As illustrated in FIG. 1, an underbody 1 of the automotive vehicle comprises a plurality of frame members, and a plurality of floor panels 2, 4, 6, 8, 10, 12, 14 and 16, which constitute at least part of a floor portion of a cabin or passenger compartment, which are or are to be coupled to these frame members.

First, the frame members will be described referring to FIG. 1. The frame members, as illustrated in FIG. 1, a pair of front side frames 18, side sills 20, front or floor side frames 22, rear side frames 24, which extend substantially in a longitudinal direction LD of the vehicle, No. 1 through No. 9 cross members 26 through 34 which extend substantially in a vehicle width direction WD, and No. 1 through No. 3 tunnel side members 36 through 38 which extend substantially in the longitudinal direction LD between the cross members.

A pair of front side frames 18 preferably having a substantially closed cross section is provided at the front portion of the underbody 1 of the vehicle so as to extend substantially in the longitudinal direction LD and at least partly enclose an engine room from the both sides. A No. 1 cross member 26 preferably having a substantially closed cross section, a reinforced member extending substantially in the vehicle width direction WD, is connected to front ends of the front side frames 18. Further, to the front side frames 18 are or are to be respectively attached an engine 40 and a front suspension cross member 42, and front suspensions 44 are supported at the front suspension cross member 42.

To rear ends of the front side frames 18 is coupled a No. 2 cross member 27 which extends substantially in the vehicle width direction WD at a front end portion of the floor portion of the vehicle body. The No. 2 cross member 27 is to be attached to a lower slant portion of a dash panel (not illustrated) which at least partly separates the cabin from the engine room, and comprises a pair of torque box members 27a preferably having a substantially closed cross section which is to be disposed outside the front side frames 18, and a dash lower cross member 27b preferably having a substantially closed cross section which is to be disposed between the front side frames 18. The above-described side sills 20, front side frames 22 and rear side frames 24, which respectively extend substantially in the longitudinal direction LD as preferred reinforcing members, are provided at a floor portion in back of the No. 2 cross member 27.

The side sills 20 preferably have a substantially closed cross section, and front ends of the side sills 20 are to be coupled to the both ends of the No. 2 cross member 27. Inner edge portions of the side sills 20 are curved or bent inward at a region from their substantially medium or intermediate portions located between the No. 3 cross members 28 and the No. 4 cross members 29 to their portions located at the No. 4 cross members 29.

Between these side sills 20 are respectively provided the front or floor side frames 22 preferably having a substantially U-shaped cross section, and the front ends of the floor side frames 22 are to be coupled to rear end portions of the front side frames 18 and the No. 2 cross member 27. The floor side frames 22 are curved or bent inward at portions 22a between the No. 3 cross member 28 and the No. 4 cross member 29. Further, the floor side frames 22 are bent or curved substantially in the vehicle width direction WD at connecting portions 29a with the No. 4 cross member 29 and connecting portion 30a with the No. 5 cross member 30, respectively. Other portions of the floor side frames 22 preferably extend substantially straight.

Front end portions of the rear side frames 24 preferably having a substantially U-shaped cross section are to be coupled to respective rear end portions of the floor side frames 22. Also, respective front end portions of the rear side frames 24 are bent outward and also connected to inside faces of the side sills 20. At these front end portions are provided reinforcing members 24a extending substantially in the vehicle width direction WD. These rear side frames 24 extend to rear end edge portions of the floor portion, and a rear suspension cross member 46 is or is to be attached thereto between a No. 7 cross member 32 and a No. 8 cross member 33. Rear suspensions 48 are to be supported at the rear suspension cross member 46.

In addition to the above-described No. 1 cross member 26 and No. 2 cross member 27, there are provided the No. 3 through No. 8 cross members 28 through 33 preferably having the substantially U-shaped cross section, and a No. 9 cross member 34 preferably having a substantially closed cross section, as preferred reinforcing members extending substantially in the vehicle width direction WD. The No. 3 cross member 28 is provided in back of the No. 2 cross member 27 and extends substantially straight substantially in the vehicle width direction WD, substantially in parallel to the No. 2 cross member 27. The No. 3 cross member 28 is coupled to the side sills 20 at both end portions, and passes across the floor side frames 22 at the both sides and are connected thereat.

In back of the No. 3 cross member 28 is provided the No. 4 cross member which extends substantially in the vehicle direction straight in parallel to the No. 3 cross member 28. The No. 4 cross member 29 is to be coupled to the side sills 20 at or near both end portions, and passes across the floor side frames 22 at the both sides and are connected thereat. These No. 3 and No. 4 cross members 28 and 29 project upward respectively at their intermediate or central portions substantially corresponding to a floor tunnel portion 50.

The No. 5 cross member 30, No. 6 cross member 31 and No. 7 cross member 32 are provided in back of the No. 4 cross member 29, and these cross members 30, 31 and 32 extend substantially straight substantially in the vehicle width direction WD, substantially in parallel to each other. Both end portions of the No. 5 cross member 30 are coupled to the floor side frames 22, and respective both ends of the No. 6 and No. 7 cross members 31 and 32 are to be coupled to the rear side frames 24. In back of the No. 7 cross member 32 is provided the No. 8 cross member 33 which is curved or bent forward at its intermediate or central portion so as to extend substantially in the vehicle width direction WD. And, both end portions of the No. 8 cross member 33 are coupled to the rear side frames 24, respectively. Further, behind the No. 8 cross member 33 is provided the No. 9 cross member 34 preferably having the substantially closed cross section which extend substantially straight substantially in the vehicle width direction WD at or near the rear end edge portion of the floor portion. Both end portions of the No. 9 cross member 34 are coupled to rear end portions of the rear side frames 24, respectively.

In addition to the above-described front side frames 18, side sills 20, floor or front side frames 22 and rear side frames 24, there are provided No. 1 through No. 3 tunnel side members 36 through 38 preferably having the substantially U-shaped cross section which respectively extend substantially in the longitudinal direction LD at or near both-side edge portions of the floor tunnel portion 50, as reinforcing members extending in the vehicle width direction WD. The No. 1 tunnel side members 36 extend substantially straight between the No. 2 cross member 27 and the No. 3 cross member 28, and its both end portions are to be coupled to the cross members 27 and 28, respectively.

The No. 2 tunnel side members 37 extends substantially straight between the No. 4 cross member 29 and the No. 5 cross member 30, and its both end portions are to be coupled to the cross members 29 and 30, respectively. The No. 3 tunnel side member 38 extend substantially straight between the No. 6 cross member 31 and the No. 7 cross member 32, and its both end portions are to be coupled to the cross members 31 and 32, respectively.

The above-described frame members preferably having the substantially U-shaped cross section, i.e., the floor or front side frames 22, rear side frames 24, No. 3 through No. 8 cross members 28 through 33 and No. 1 through No. 3 tunnel side members 36 through 38, are provided in such a manner that their open ends of the U-shaped cross section are directed substantially upward and their flange or connecting portions are to be fixed to respective lower faces of the floor panels 2, 4, 6, 8, 10, 12, 14 and 16 to preferably form substantially rectangular closed cross sections thereby.

Next, the floor panel will be described referring to FIG. 1. As illustrated in FIG. 1, the first through eighth floor panels 2, 4, 6, 8, 10, 12, 14 and 16 which preferably are made of metal or steel plates with press forming are provided at the underbody 1 of the automotive vehicle. The first floor panel 2 is provided so as to at least partly cover an area enclosed by the No. 2 cross member 27, side sills 20 and No. 3 cross member 28, and its central or intermediate portion projects substantially upward to form the floor panel portion 50 extending substantially in the longitudinal direction LD. The first floor panel 2 is coupled to a rear side face of the No. 2 cross member 27 at or near a front edge portion of its one side, and lower faces of other edge portions at its remaining three sides are to be coupled to the side sills 20 and No. 3 cross member 28, respectively. Further, lower faces of both sides of the first floor panel 2 are to be coupled to the No. 1 tunnel member 36 and the floor side frame 22, respectively.

Further, there are provided bent line portions 52 on the first floor panel 2 at both sides of the floor tunnel portion 50, which extend substantially straight substantially in the vehicle width direction WD in parallel to the No. 2 cross member 27 and No. 3 cross member 28. The bent line portions 52 are formed by bending the first floor panel 2 substantially in or along the longitudinal direction LD at a specified (predetermined or predeterminable) angle with a straight bending line. At the first floor panel 2 are formed eight panel area S1 through S8 which are at least partly enclosed by the frame members 20, 22, 27, 28 and 36 and the bent line portions 52. The panel area S5 through S8 extend backward and upward, i.e., obliquely, from the panel area S1 through S4.

The second floor panel 4 is provided so as to at least partly cover an area enclosed by the No. 3 cross member 28, side sills 20 and No. 4 cross member 29, and its central or intermediate portion projects upward to form the floor panel or tunnel portion 50 extending substantially in the longitudinal direction LD. The second floor panel 4 is to be coupled to the No. 3 cross member 28, side sills 20 and No. 4 cross member 29 at lower faces of edge portions at its four sides, respectively. Further, lower faces of both sides of the second floor panel 4 are to be coupled to the floor side frame 22, respectively.

Also, there are provided bent line portions 54 having a substantially straight bending line at both edge portions of the floor tunnel portion 50 on the second floor panel 4. The floor tunnel portion 50 rises from the bent line portions. Further, on the second floor panel 4 are provided one or more beads 56 which extend substantially straight along and at both sides of the above-described curved portions 22a of the floor side frames 22. The beads 56 preferably extend from the No. 3 cross member 28 to the No. 4 cross member 29. At the second floor panel 4 are formed four panel area S9 through S12 which are enclosed by the frame members 20, 22, 28 and 29, the bent line portions 54 and the beads 56.

The third floor panel 6 is provided so as to at least partly cover an area enclosed by the No. 4 cross member 29, floor side frames 22 and No. 5 cross member 30, and its central or intermediate portion projects upward to form the floor panel portion 50 extending substantially in the longitudinal direction LD. The third floor panel 6 is to be coupled to the No. 4 cross member 29, floor side frames 22 and No. 5 cross member 30 at lower faces of edge portions at its four sides, respectively. Further, lower faces of both sides of the third floor panel 6 are coupled to the No. 2 tunnel side member 37, respectively.

Further, there are provided one or more beads 58 on the third floor panel 6 at both sides of the floor tunnel portion 50, which extend substantially straight substantially in the vehicle width direction WD in parallel to the No. 4 cross member 29 and No. 5 cross member 30. The beads 58 are formed by projecting part of the third floor panel 6 upward. At the third floor panel 6 are formed four panel area S13 through S16 which are at least partly enclosed by the frame members 22, 29, 30 and 37, and the beads 58.

The fourth floor panel 8 is provided outside the third floor panel 6 and extend substantially in the longitudinal direction LD so as to at least partly cover an area enclosed by the No. 4 cross member 29, side sills 20, floor side frames 22 and rear side frames 24, and its rear edge portion extends near the No. 8 cross member 33. The fourth floor panel 8 is to be coupled to the respective frame members 20, 22, 24 and 29. The fifth floor panel 10 is provided so as to at least partly cover an area enclosed by the No. 5 cross member 30, No. 6 cross member 31, floor side frames 22 and rear side frames 24. The fifth floor panel 10 is to be coupled to the frame or cross members 22, 24, 30 and 31 at lower faces of edge portions at its four sides, respectively.

The sixth floor panel 12 is provided so as to at least partly cover an area enclosed by the No. 6 cross member 31, No. 7 cross member 32 and rear side frames 24. The sixth floor panel 12 is to be coupled to the frame members 24, 31 and 32 at lower faces of edge portions at its four sides, respectively. The seventh floor panel 14 is provided so as to at least partly cover an area enclosed by the No. 7 cross member 32, No. 8 cross member 33 and rear side frames 24. The seventh floor panel 12 is to be coupled to the frame members 24, 32 and 33 at lower faces of edge portions at its four sides, respectively. The eighth floor panel 16 is provided so as to at least partly cover an area enclosed by the No. 8 cross member 33, No. 9 cross member 34 and rear side frames 24. The eighth floor panel 16 is to be coupled to the frame members 24, 33 and 34 at lower faces of edge portions at its four sides, respectively.

At the underbody 1 of the automotive vehicle described above, vibration of the engine 40, front suspension 44 and/or rear suspension 48 is transmitted to the front side frames 22 and rear side frames 24 via the front suspension cross member 42, front side frames 18 and rear suspension cross member 46, and then to the cross members 26 through 34, side sills 20 and tunnel side members 36 through 38. The transmitted vibration is further transmitted to the first through eighth floor panels 2, 4, 6, 8, 10, 12, 14 and 16, thereby generating acoustic emission.

The preferred embodiments of the present invention are to suppress or reduce the noise generated from the panel area S1 through S16 which is caused by the vibration transmitted from the frame members, by providing a vibration reduction structure respectively at those panel area S1 through S16 of the first through third floor panels 2; 4 and 6. Herein, the fourth through eighth floor panels 8, 10, 12, 14 and 16 are configured of conventional panels. Now, the preferred vibration reduction structure will be described. The vibration reduction structure of the vehicle body according to the present embodiments is that there are provided a high-rigidity area and a low-rigidity area at a specified (predetermined or predeterminable) area of the floor panel (S1 through S16) which is enclosed by the frame members. Preferably the high-rigidity area is about 50 or more times more rigid than the low-rigidity area. The vibration energy transmitted to this area is increased at the low-rigidity area due to the difference in rigidity or in weight between the high-rigidity area and the low-rigidity area. This increased vibration energy causes a large vibration strain, and this large vibration strain produces a high vibration damping effect by a damping function of a material (preferably steel plate) which forms at least part of the floor panel. Accordingly, the vibration can be reduced effectively. Particularly, the high-rigidity area and low-rigidity area in the vibration reduction structure of the preferred embodiments are configured such that the rigidity difference or the weight difference between the both area become great. Thus, the acoustic emission generated from the respective area is reduced. Further, a damping material is provided at the low-rigidity area to further improve the vibration reduction.

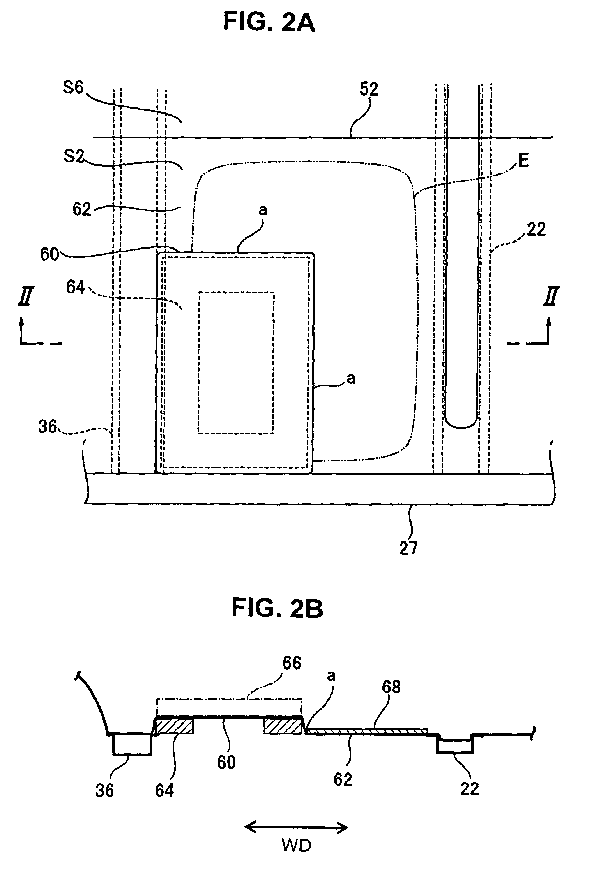

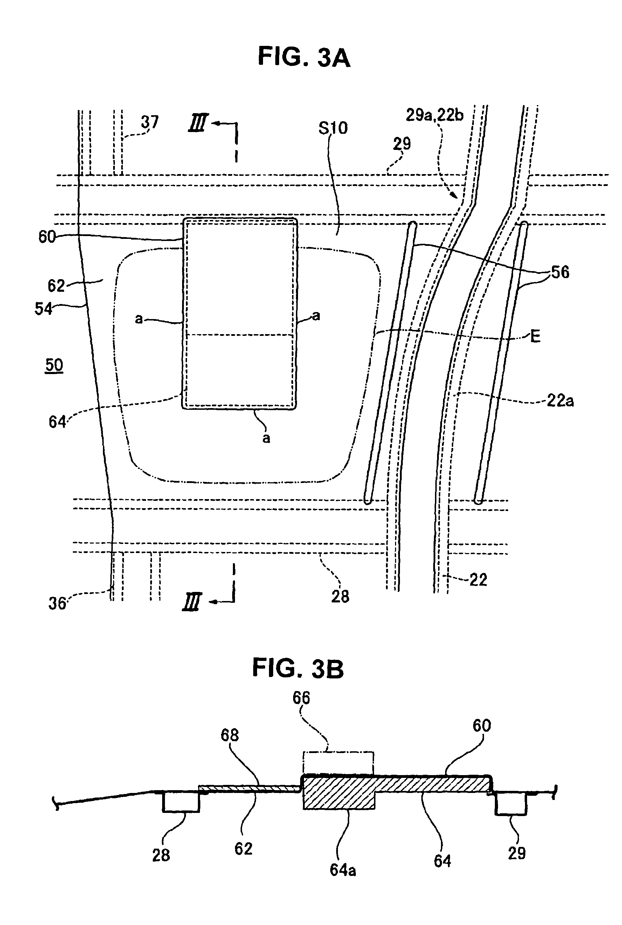

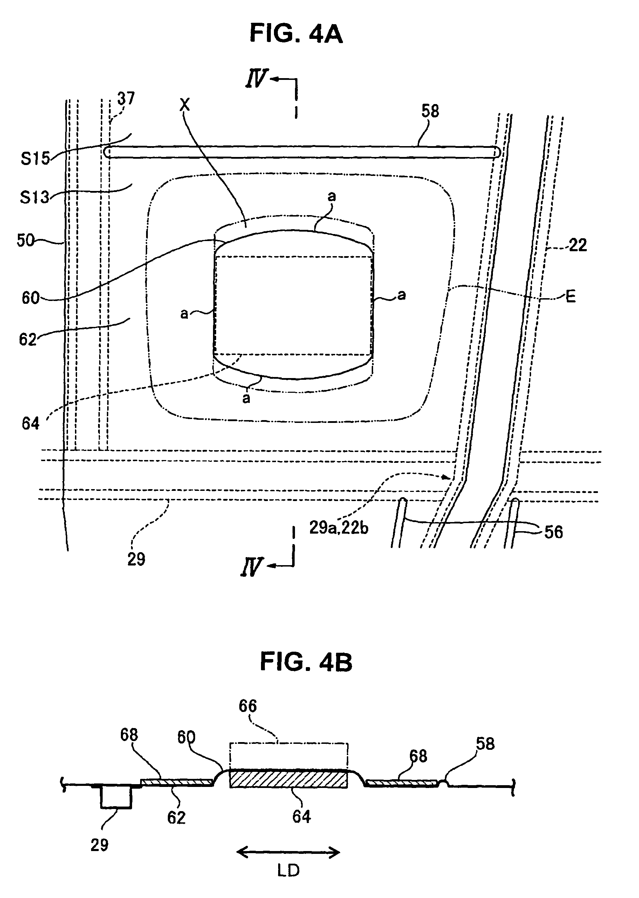

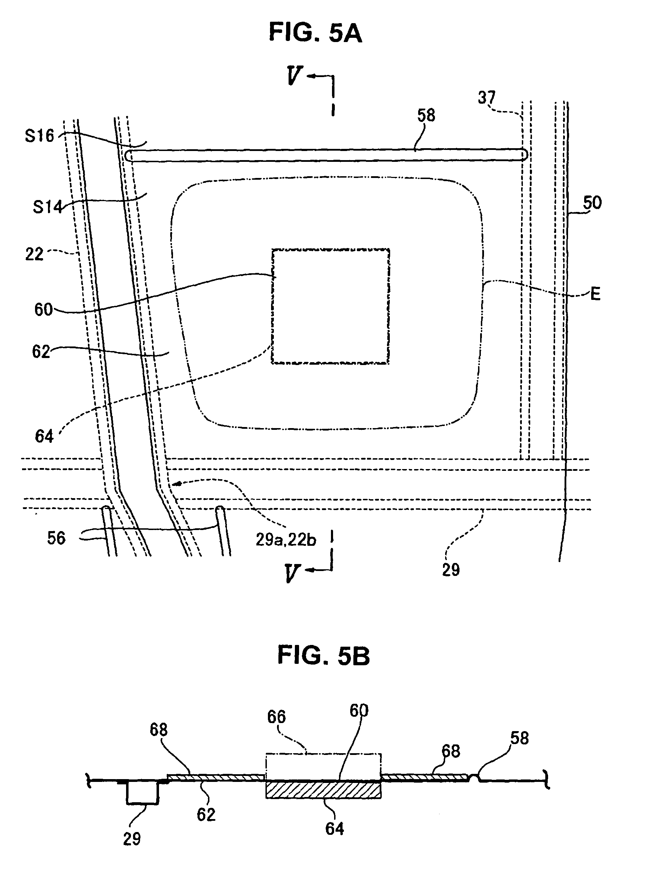

First, the floor panel structure of the vehicle body according to the first preferred embodiment will be described specifically referring to FIGS. 2A, 2B through 5A, 5B. In the first embodiment, the high-rigidity area and the low-rigidity area are provided at the panel area S2, S10, S13 and S14 as the vibration reduction structure. And, to the high-rigidity area are attached auxiliary components, such as CD changer, navigation unit, CPU device, some electric sources, console box, some hamesses and/or air conditioner devices. Accordingly, the rigidity and weight of the high-rigidity area is increased particularly in order to ensure the effect of vibration reduction. FIG. 2A is an enlarged plan view of the panel area S2 according to the first embodiment, and FIG. 2B is a sectional view taken along line 11-11 of FIG. 2A, illustrating a sectional structure of the panel area S2 in the vehicle width direction WD. Likewise, FIG. 3A is an enlarged plan view of the panel area S10 and FIG. 3B is a sectional view taken along line III-III of FIG. 3A. FIG. 4A is an enlarged plan view of the panel area S13 and FIG. 4B is a sectional view taken along line IV-IV of FIG. 4A. FIG. 5A is an enlarged plan view of the panel area S14 and FIG. 5B is a sectional view taken along line V-V of FIG. 5A.

Next, the vibration reduction structure at the panel area S2 will be described referring to FIG. 2A, 2B. As illustrated in FIG. 2A, the panel area S2 is formed by being at least partly enclosed by the frame members of No. 2 cross member 27, floor side frame 22 and No. 1 tunnel side member 36, and the bent line portion 52, as described above. Also, this panel area S2 is formed preferably in the substantially rectangular shape with a pair of substantially straight parallel lines of the No. 2 cross member 27 and the bent line portion 52 and another pair of substantially straight parallel lines of the floor side frame 22 and the No. 1 tunnel side member 36. Herein, the bent line portion 52 is formed by bending the first floor panel 2 with the substantially straight bending line, as described above, and preferably constitutes a vibration restraint portion to control the vibration area of the panel area S2, by restraining a vibration linkage between vibration occurring at the panel area S2 and vibration occurring at the panel area S6 next to the panel area S2.

The high-rigidity area 60 preferably having a substantially rectangular shape and the low-rigidity area 62 extending substantially in a L shape at least partly around the high-rigidity area are formed within the panel area S2. Two sides of the high-rigidity area 60, as boundary lines a with the low-rigidity area 62, extend straight, and its remaining two sides extend contacting respective edges of the No. 2 cross member 27 and the No. 1 tunnel side member 36. The high-rigidity area 60 extends to an intermediate portion, preferably an approximately central portion, of the panel area S2. Herein, the width of the low-rigidity area 62, i.e., length between the boundary line a and the frame member 22 or the bent line portion 52, is set at a specified (predetermined or predeterminable) value which could not increase the rigidity of the low-rigidity area 6 too much, but provide a proper rigidity.

The high-rigidity area 60 is formed by projecting part of the floor panel substantially upward as illustrated in FIG. 2B, and its sectional shape is substantially trapezoid. As illustrated in FIGS. 2A and 2B, a bracket 64 substantially extending in a collar or ring shape is disposed in a space at least partly formed by the high-rigidity area projecting upward. This bracket 64 supports one or more auxiliary parts 66 on the upper surface of the high-rigidity area 60. The bracket 64 has a peripheral shape substantially corresponding to respective sides of the high-rigidity area 60, and two sides of the bracket 64 are to be fixed to the No. 2 cross member 27 and the No. 1 tunnel side member 36, respectively. Also, the bracket 64 preferably is equipped with screw holes (not illustrated) to attach the one or more auxiliary parts 66.

Meanwhile, the low-rigidity area 62 is formed in a substantially flat shape and a damping material 68 is provided at least partly over the low-rigidity area 62, as illustrated in FIG. 2B. Herein, the damping material is not illustrated in FIG. 2A, and likewise, the illustration of the damping material is omitted in the plan views. The damping material 68 is provided such that the total rigidity of the low-rigidity area 62 and the damping material 68 is still smaller than the rigidity of the high-rigidity area 60. For example, an asphalt-based damping material with an approximately 1.7 specific gravity; an approximately 6B pencil-hardness (product name: Damping sheet by Hirotani Corporation) may be preferably applied as the above-described damping material 68. This damping material is formed in a sheet shape substantially corresponding to the L-shaped contours of the low-rigidity area 62 and pasted or adhered on it.

Next, the vibration reduction structure at the panel area S10 will be described referring to FIG. 3A, 3B. As illustrated in FIG. 3A, the panel area S10 is formed by being at least partly enclosed by the frame members of No. 3 cross member 28 and No. 4 cross member 29, the bent line portion 54 being provided at or near the edge portion of the floor tunnel portion 50, and the bead 56 being provided substantially along the curved portion 22a of the floor side frame 22, as described above. Also, this panel area S10 preferably is formed in the substantially rectangular shape, with straight lines of the bent line portion 54 and the bead 56 and a pair of substantially straight parallel lines of the No. 3 cross member 28 and No. 4 cross member 29. Particularly, in the present embodiment, the bead 56 is formed so as to extend substantially straight along and inside the curved portion 22a of the floor side frame 22, thereby forming the substantially rectangular panel area of the panel area S10. Herein, both the bent line portion 54 and the bead 56 preferably function as a vibration restraint portion to control the vibration area of the panel area S10.

The high-rigidity area 60 having the substantially rectangular shape and the low-rigidity area 62 extending substantially in a U shape at least partly around the high-rigidity area are formed within the panel area S10. Three sides of the high-rigidity area 60, as boundary lines a with the low-rigidity area 62, extend substantially straight respectively, and its remaining one side extends contacting an edge of the No. 4 cross member 29. The high-rigidity area 60 extends to the intermediate portion, preferably the approximately central portion, of the panel area S10, and the low-rigidity area 62 extends with a specified (predetermined or predeterminable) width, as described above at the panel area S2.

Herein, the No. 4 cross member 29 which the high-rigidity area 60 contacts is configured such that the connecting rigidity at its connection portion 29a with the floor side frame 22 is relatively small compared to (or smaller than) other cross members. Namely, in the present embodiment, the contacting area of the No. 4 cross member 29 and the floor side frame 22 is smaller than the contacting area of, for example, the No. 3 cross member 28 and the floor side frame 22. Accordingly, the amount of vibration which is transmitted from the engine 40 and the suspensions 44 and 48 to the No. 4 cross member 29 via the floor side frame 22 is reduced. Herein, the connecting rigidity may be made small compared to the other cross members by interconnecting the No. 4 cross member 29 and the floor side frame 22 with a bolt fastening.

The high-rigidity area 60 is formed by projecting part of the floor panel substantially upward as illustrated in FIG. 3B, and its sectional shape preferably is substantially trapezoid. The low-rigidity area 62 is formed in a substantially flat shape and the damping material 68 is provided over the low-rigidity area 62, like the panel area S2 described above. Also, as illustrated in FIGS. 3A and 3B, the bracket 64 is disposed in the space formed by the high-rigidity area 60 projecting upward, and the bracket 64 supports auxiliary parts 66 on the upper surface of the high-rigidity area 60. The bracket 64 has the rectangular shape substantially corresponding to respective sides of the high-rigidity area 60, and one side of the bracket 64 is to be fixed to the No. 4 cross member 29.

This bracket 64 extends to an intermediate portion, preferably to the approximately central portion, of the panel area S10, like the high-rigidity area 60, and includes a thick portion 64a at its intermediate portion (preferably substantially at its central portion) so that the weight of its intermediate or central portion can be heavier than the other portion. This thick portion 64 is equipped with one or more screw holes (not illustrated) to attach the one or more auxiliary parts 66 at the approximately center portion of the panel area S10.

Next, the vibration reduction structure at the panel area S13 will be described referring to FIGS. 4A, 4B. As illustrated in FIG. 4A, the panel area S13 is formed by being at least partly enclosed by the frame members of No. 4 cross member 29, floor side frame 22 and No. 2 tunnel side member 37, and the bead 58, as described above. Also, this panel area S13 preferably is formed in the substantially rectangular shape, with substantially straight lines of the floor side frame 22 and No. 2 tunnel side member 37 and a pair of substantially straight parallel lines of No. 4 cross member 29 and bead 58. Particularly, the floor side frame 22 is configured so as to be bent at or near the connecting portions 29a and 30a with the No. 4 cross member 29 and the No. 5 cross member 30 (bent portions 22b and 22c) (see FIG. 1), and to extend substantially straight between the No. 4 cross member 29 and the No. 5 cross member 30. Herein, the bead 58 preferably functions as a vibration restraint portion to control the vibration area of the panel area S13.

The high-rigidity area 60 preferably having the substantially rectangular shape is formed at an intermediate portion (preferably substantially a central portion) of the panel area S13 so as not to contact any frame members 22, 29 and 37. The low-rigidity area 62 is formed so as to at least partly surround the high-rigidity area 60. Two sides of the high-rigidity area 60, as boundary lines a with the low-rigidity area 62, extend substantially straight respectively, and its remaining two sides substantially extending in the vehicle width direction WD is formed so as to curve slightly. The low-rigidity area 62 extends with a specified width, as described above at the panel area S2.

The high-rigidity area 60 is formed by projecting part of the floor panel substantially upward as illustrated in FIG. 4B, and its sectional shape is formed such that its intermediate portion (preferably substantially central portion) is substantially flat and its two peripheral side portions, which extend substantially in the vehicle width direction WD, curve down, while the remaining two peripheral side portions, which extend in the longitudinal direction LD, go straight down like the above-described panel area S10. The low-rigidity area 62 is formed in a substantially flat shape and the damping material 68 is provided at least partly over the low-rigidity area 62, like the panel area S2 described above. Also, as illustrated in FIGS. 4A and 4B, the substantially rectangular bracket 64 is disposed in the space formed by the high-rigidity area 60 projecting substantially upward, and the bracket 64 supports or can support one or more auxiliary parts 66 on or at the upper surface of the high-rigidity area 60. The bracket 64 is disposed so as to be adjacent to the boundary lines a of the high-rigidity area 60.

Next, the vibration reduction structure at the panel area S14 will be described referring to FIG. 5A, 5B. As illustrated in FIG. 5A, the panel area S14 preferably is formed in the substantially rectangular shape by being at least partly enclosed by the frame members of No. 4 cross member 29, floor side frame 22 and No. 2 tunnel side member 37, and the bead 58, like the panel area S13.

As illustrated in FIGS. 5A and 5B, the bracket 64 is attached to the lower face of the central portion of the panel area S14 so as not to contact the frame members 22, 29, 37 and the bead 58. The bracket 64 supports or can support one or mroe auxiliary parts 66 on or at the upper surface of the floor panel. The bracket 64 preferably has the substantially rectangular shape with its four substantially straight sides. The bracket 64 and the area having the bracket 64 preferably constitute or form part of the high-rigidity area 60 within the panel area S14. Meanwhile, the flat low-rigidity area 62 is formed so as to at least partly surround the high-rigidity area 60. The low-rigidity area 62 extends with a specified (predetermined or predeterminable) width, as described above at the panel area S2, and the damping material 68 is provided at least partly over or at the low-rigidity area 62, like the panel area S2.

Herein, for the panel area S2, S10, S13 and S14 of the present embodiments, the high-rigidity area 60 may be firmed so as to project substantially downward, and the bracket 64 may be disposed in a space formed thereby to attach the one or more supports auxiliary parts 66 at or to the lower surface of the panel. Or, the auxiliary parts 66 may be supported directly on the bracket 64.

Next, function and effect of the floor panel structure according to the first embodiment will be described. Since the high-rigidity area 60 and the low-rigidity area 62 being provided at least partly around the high-rigidity area 60 are formed within the panel area S2, S10, S13 and/or S14 of the floor panel structure, the vibration energy is increased at the low-rigidity area 62 due to the difference in rigidity between the high-rigidity area 60 and the low-rigidity area 62. Further, since the auxiliary parts 66 is supported at or to the high-rigidity area 60, the rigidity of the high-rigidity area 60 is increased by the auxiliary parts 66 and thereby the above-described difference in rigidity is enhanced. Also, the auxiliary parts 66 increases the weight of the high-rigidity area 60, thereby increasing the difference in weight between the high-rigidity area 60 and the low-rigidity area 62. Accordingly, the vibration energy is further increased at the low-rigidity area 62 due to this difference in weight.

The vibration energy being properly increased at the low-rigidity area 62 is transformed to the thermal energy by the damping effect of the floor panel, preferably of the steel plate forming the floor panel. Thus, the vibration energy at the panel area is reduced, and thereby the acoustic emission generated from the panel area is reduced.

Further, since the damping material 68 is provided at the low-rigidity area 62, the vibration energy being increased at the low-rigidity area 62 is further reduced. Particularly, since the damping material 68 is configured such that the total rigidity of the damping material 68 and the low-rigidity area 62 is smaller than the rigidity of the high-rigidity area 60, the vibration energy can be reduced properly without preventing the increasing of the vibration energy at the low-rigidity area 62.

Next, function and effect of disposition of the high-rigidity area 60 will be described. First, at the panel area S2 and S10 of the present embodiment, the high-rigidity area 60 is formed extending preferably to the approximately central portion of the respective panel area. And, at the panel area S13 and S14, the high-rigidity area 60 preferably is formed at the approximately central portion of the respective panel area.

Herein, the frame members 22, 27, 28, 29, 36 and 37, and the bent line portions 52 and 54 and the beads 56 and 58, which are preferred vibration restraint portions, have relatively high rigidity, and thereby the amplitude of vibration thereof is small. Accordingly, portions of the panel area S13 and S14 which are adjacent to these frame members and vibration restraint portions do not show their relatively large amplitude of vibration, while the central portion thereof shows their larger amplitude of vibration. Namely, the panel area shows the low rigidity at the center, and the high rigidity at the peripheral portion near the frame members and the vibration restraint portions.

According to the present embodiment, since the high-rigidity area 60 is formed at or near the central portion or so as to extend to or near to the central portion of the respective panel area S2, S10, S13 and S14, the difference in rigidity between the high-rigidity area 60 and the low-rigidity area 62 can be made larger and thereby the vibration energy can be increased surely at the low-rigidity area 62. Further, since the weight of the central portion of the panel area is increased by the auxiliary parts 66, the vibration energy can be further increased at the low-rigidity area 62 due to the difference in weight. Also, since the low-rigidity area 62 extends with the specified (predetermined or predeterminable) width so as not to increase its rigidity improperly, the increasing of the vibration energy at the low-rigidity area 62 can be attained surely. Also, since the high-rigidity area 60 extends to or near to the central portion of the panel area S2 and S10, the vibration energy can be increased surely at the low-rigidity area 62 near the two or three sides.

Since the two sides of the high-rigidity area 60 at the panel area S2 contact the frame members 27 and 36 or the one side of the high-rigidity area 60 at the panel area S10 contacts the frame member 29, the rigidity of the respective high-rigidity area 60 can be increased greatly. Accordingly, the difference in rigidity between the high-rigidity area 60 and the low-rigidity area 62 can be further increased, and thereby the vibration energy can be increased surely at the low-rigidity area 62. Herein, the same effect can be obtained by the high-rigidity area 60 contacting the vibration restraint portions of the bent line portions 52 and 54 or the beads 56 and 58.

Herein, as described above, the No. 4 cross member 29 is configured such that the connecting rigidity at its connection portion 29a with the floor side frame 22 preferably is relatively small compared to other cross members. Accordingly, the amount of vibration transmitted to the No. 4 cross member 29 is small. Since the high-rigidity area 60 contacts this No. 4 cross member 29 at the panel area S10, the acoustic emission generated by the vibration being transmitted directly to the high-rigidity area 60 and the vibration being transmitted to the low-rigidity area 62 via the high-rigidity area 60 can be suppressed properly.

Next, function and effect of the shape of the high-rigidity area 60 will be described. Since the boundary lines a of respective sides of the high-rigidity area 60 at the panel area S2, S10, S14 or the boundary lines a of two sides of the high-rigidity area 60 at the panel area S13 extend substantially straight, the vibration energy can be properly increased at the low-rigidity area 62 including the boundary lines a between the high-rigidity area 60 and the low-rigidity area 62, without increasing the rigidity of the low-rigidity area 62 adjacent to those sides. Herein, the area where the vibration energy is increased particularly is illustrated by reference character E in FIGS. 2A, 3A, 4A and 5A. As illustrated in the figures, the vibration energy tends to be increased at portions of the low-rigidity area 62 which is near the high-rigidity area 60. Particularly, the vibration energy is greatly increased at an area including the boundary lines a between the high-rigidity area 60 and the low-rigidity area 62 around the straight sides of the high-rigidity area 60.

Meanwhile, providing a curved boundary line between the high-rigidity area and the low-rigidity area by forming, for example, the substantially circular or oval or rounded high-rigidity area, can increase the rigidity more than the rectangular high-rigidity area. Since the two sides of the high-rigidity area 60 are formed of curved or bent lines at the panel area S13 in the present embodiment, the rigidity of the high-rigidity area 60 can be further increased by the curved or rounded or bent sides. Herein, as illustrated by reference character E in FIG. 4A, the rigidity of the low-rigidity area 62 which is adjacent to the boundary lines a extending in such curved or bent shape is increased, and as illustrated by reference character X, there exists a portion at which the vibration energy may not be increased. Meantime, the remaining two sides are formed of substantially straight lines at the panel area S13 in the present embodiment, and thus this area of E is prevented from being too limited.

Also, the high-rigidity area 60 with two curved sides can facilitate positioning of the damping material 68 at the low-rigidity area 62. Namely, the damping material 68 preferably is preformed substantially according to the shape of the boundary lines a of the high-rigidity area 60, and then it can be pasted easily on or mated to the low-rigidity area 62. Also, a forming accuracy of the high-rigidity area 60 can be improved.

Next, function and effect of the bracket 64 to attach the one or more auxiliary parts 66 will be described. The bracket 64 at the panel area S2, S10 and S13 is disposed in the space formed by the high-rigidity area 60 projecting. Accordingly, the rigidity increase of the low-rigidity area 62 by the bracket contacting the low-rigidity area 62 can be prevented. And, since the high-rigidity area 60 is also supported with the rigidity of the bracket 64 located in the space, the rigidity of the high-rigidity area 60 can be further increased. Further, since the difference in weight between the high-rigidity area 60 and the low-rigidity area 62 is increased at least by the weight of the bracket 64, the vibration energy is increased further effectively at the low-rigidity area 62. Also, since the bracket 64 extends along and adjacent to the boundary lines a between the high-rigidity area 60 and the low-rigidity area 62, the rigidity of the high-rigidity area 60 can be increased surely. And, the difference in rigidity between the high-rigidity area 60 and the low-rigidity area 62 can be further increased by increasing the rigidity of the high-rigidity area 60 near the boundary lines a.

Also, since the bracket 64 at the panels area S2 and S10 is attached to the frame member which the high-rigidity area 60 contacts, the strength of the bracket 64 can be ensured without increasing the rigidity of the low-rigidity area 62. And, the bracket 64 at the panel area S10 preferably extends to the intermediate portion (preferably the approximately central portion) of the panel area, and the auxiliary parts 66 is or can be attached the intermediate, preferably approximately central portion of the panel area. Accordingly, the difference in weight between the high-rigidity area 60 and the low-rigidity area 62 can be increased, and thereby the vibration energy can be increased at the low-rigidity area 62. Further, since the bracket 64 has the portion 64a which is thick enough to provide the heavier weight with the central portion of the panel area, the vibration energy can be further increased at the low-rigidity area 62. Also, since the bracket 64 is attached to the No. 4 cross member 29 which has a relatively small amount of the vibration transmitted, the acoustic emission generated from the panel area S10 by the vibration transmitted via the bracket 64 can be reduced.

Next, since the bracket 64 and the panel portion with the bracket 64 constitute at least part of the high-rigidity area 60 at the panel area S14, the high-rigidity area 60 can be provided without press-forming the panel area. Also, since the substantially flat area around the high-rigidity area 60 constitutes at least part of the low-rigidity area 62, the vibration energy can be increased properly at the low-rigidity area 62 by the difference in rigidity between the high-rigidity area 60 and the low-rigidity area 62.

Herein, the bracket 64 can be disposed in the space formed by the high-rigidity area 60 projecting downward and then the one or more auxiliary parts 66 can be attached to the lower face of the floor panel(s) or the bracket 64 directly, as described above. In this case, the same effect can be obtained.

Next, function and effect of the frame members and the vibration restraint portions which form the respective panel area will be described. In the present embodiment, the respective portions of the frame members 22, 27 through 30, 36, 37, and/or the bent line portions 52, 54, and/or the beads 56, 57, as the preferred vibration restraint portions, which form the panel area S2, S10, S13, S14 preferably are formed so as to extend substantially straight. Accordingly, the difference in rigidity between the high-rigidity area 60 and the low-rigidity area 62 can be ensured without increasing the rigidity of the low-rigidity area 62. Namely, if the above-described portions are formed so as to curve instead, the rigidity around them would increase. Thus, according to the present embodiment, such increasing of the rigidity can be prevented, and thereby the vibration energy can be increased properly at the low-rigidity area 62.

Particularly, the substantially straight bead 56 as the preferred vibration restraint portion is formed along the curved portion 22a of the floor side frame 22 at the panel area S10. The floor side frame 22 at the panel area S13 and S14 is bent at the connecting portion 29a with the No. 4 cross member 29 and at the connecting portion 30a with the No. 5 cross member 30, respectively (having bent portions 22b and 22c). Thus, the portions forming these panel area S13 and S14 preferably are formed so as to extend substantially straight.

Further, since the panel area S2 is formed in the substantially rectangular shape and the panel area S10, S13 and S14 are formed in the substantially rectangular shape with a pair of substantially parallel sides, the vibration reduction effect can be ensured without increasing the rigidity of the panel area improperly.

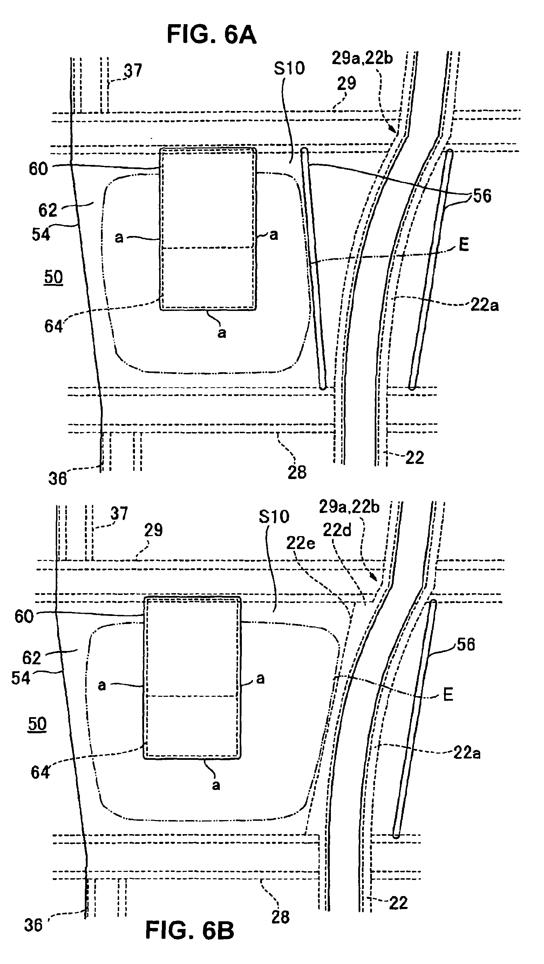

Herein, the bead 56 may be formed so as to extend substantially in parallel to the bent line portion 54 formed at the edge of the floor tunnel portion 50 at the panel area S10 as illustrated in FIG. 6A. Also, the edge portion 22e of the flange 22d of the front side frame 22 may be formed substantially straight over the panel area S10 so as to control the vibration area of the panel area S10, as illustrated in FIG. 6B. In theses case, the same effect can be obtained as well.

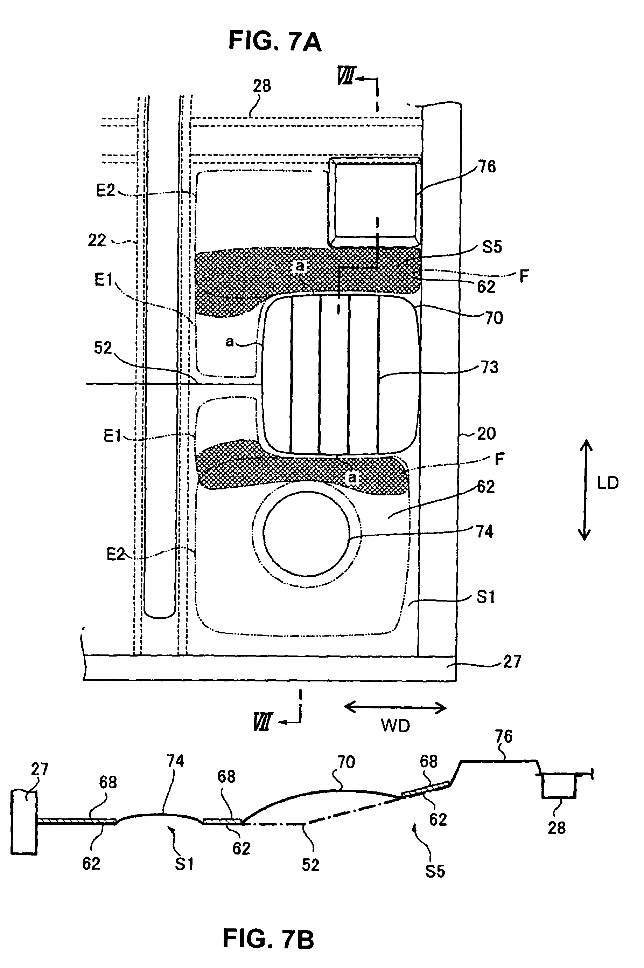

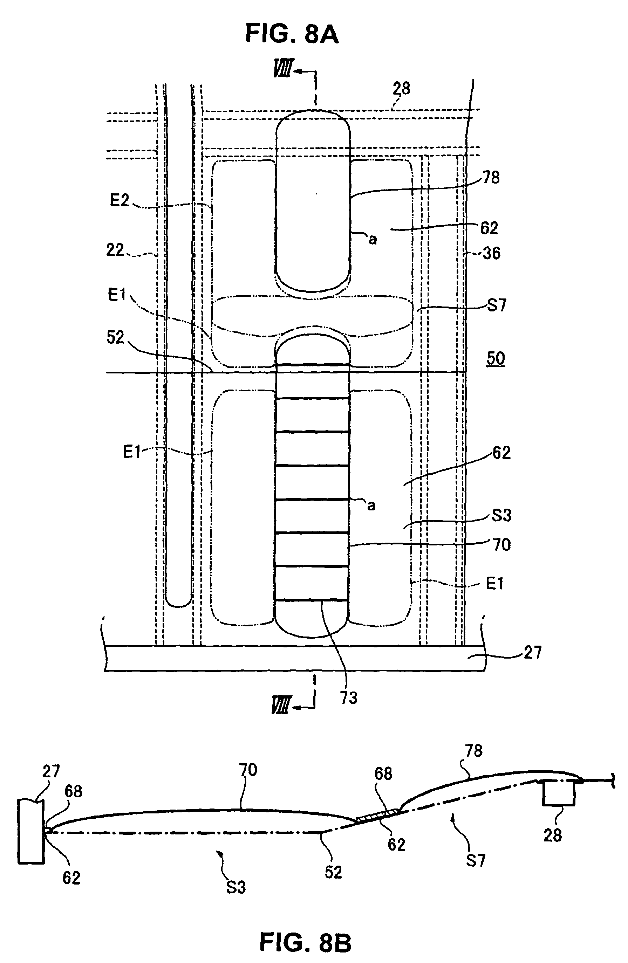

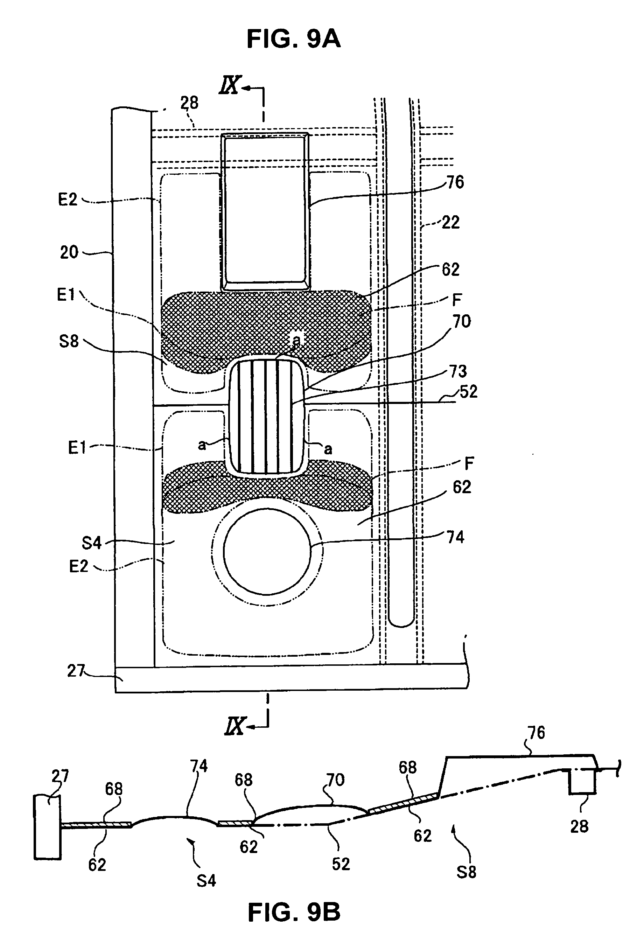

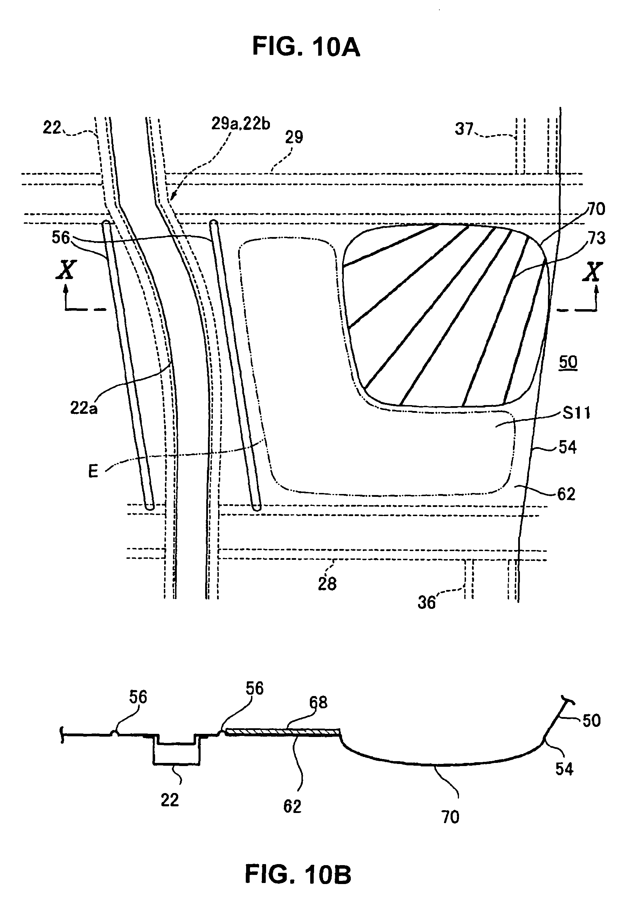

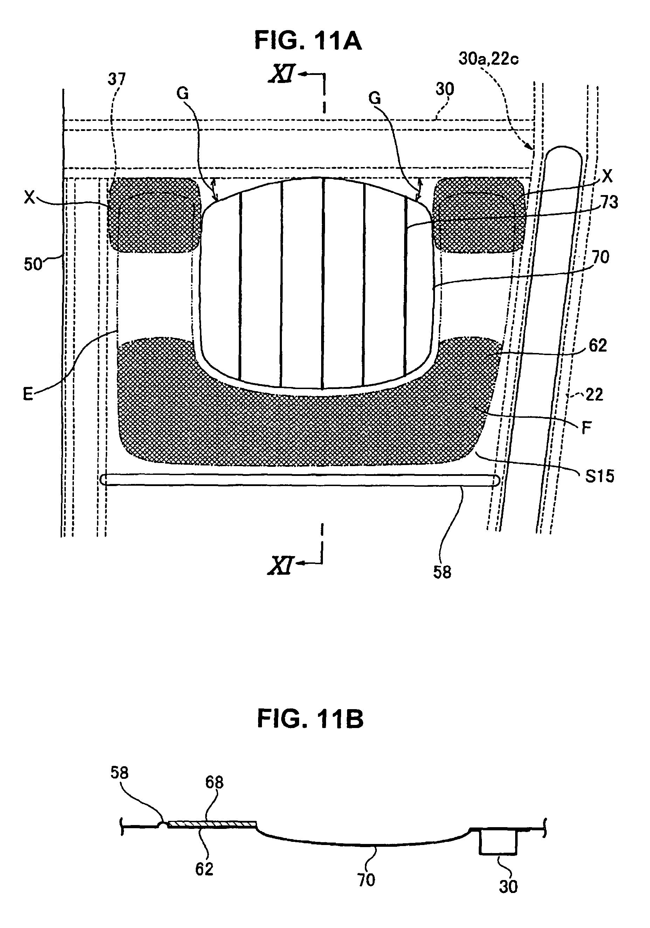

Next, the floor panel structure of the vehicle body according to the second preferred embodiment will be described specifically referring to FIGS. 1, 7A, 7B through 11A, 11B. In the second embodiment, the high-rigidity area and the low-rigidity area are provided at or adjacent to the panel area S1 and S5, S3 and S7, S4 and S8, S6, S11, S15, S16 as the preferred vibration reduction structure, and the high-rigidity area is formed so as to contact the frame member in order to increase its rigidity. Thus, the effect of vibration reduction is ensured. FIG. 7A is an enlarged plan view of the panel area S1 and S5 according to the second embodiment, and FIG. 7B is a sectional view taken along line VII-VII of FIG. 7A, illustrating a sectional structure of the panel area S1 and S5 in the longitudinal direction LD of the vehicle. Likewise, FIG. 8A is an enlarged plan view of the panel area S3 and S7 and FIG. 8B is a sectional view taken along line VIII-VIII of FIG. 8A. FIG. 9A is an enlarged plan view of the panel area S4 and S8 and FIG. 9B is a sectional view taken along line IX-IX of FIG. 9A. FIG. 10A is an enlarged plan view of the panel area S11 and FIG. 10B is a sectional view taken along line X-X of FIG. 10A. FIG. 11A is an enlarged plan view of the panel area S15 and FIG. 11 B is a sectional view taken along line XI-XI of FIG. 11A.

Next, the vibration reduction structure at the panel area S1 and S5 will be described referring to FIG. 7A, 7B. As illustrated in FIG. 7A, the panel area S1 and S5 includes commonly the bent line portion 52, and the panel area S1 is formed by being at least partly enclosed by the bent line portion 52, the frame members of No. 2 cross member 27, side sill 20 and floor side frame 22, as described above. The panel area S5 is formed by being at least partly enclosed by the bent line portion 52, the frame members of side sill 20, floor side frame 22 and No. 3 cross member 28, as described above. Also, these panel area S1 and S5 are formed substantially in the rectangular shape with a pair of substantially straight parallel lines of the No. 2 cross member 27 and the bent line portion 52, another pair of substantially straight parallel lines of the bent line portion 52 and the No. 3 tunnel side member 28, and another pair of substantially straight parallel lines of the side sill 20 and the floor side frame 22. Herein, the bent line portion 52 functions as the preferred vibration restraint portion, as described above.

A high-rigidity area 70 having the substantially rectangular shape is formed over or at the panel area S1 and S5. The sides of the high-rigidity area 70, as boundary lines a with the low-rigidity area 62 which will be described below, are formed so as to extend substantially straight with a slightly curved line. The high-rigidity area 70 is located adjacent to the side sill 20 at a terminal portion of the bent line portion 52, contacting the bent line portion 52 at an intermediate portion (preferably at a approximately central portion) of its one side and contacting the side sill 20 at a approximately central portion of its opposite side. Herein, the high-rigidity area 70 may be formed so as to contact the side sill 20 preferably at a substantially entire portion of the one side. Also, high-rigidity area 70 includes a plurality of reinforcing beads 73 which extend in the longitudinal direction LD over the panel area S1 and S5.

The high-rigidity area 70 is formed by projecting part of the floor panel substantially upward between the panel area S1 and S5, as illustrated in FIG. 7B, such that its cross section is formed in a dome shape.

Next, a circular high-rigidity area 74 is formed at an intermediate portion (preferably substantially at the approximately central portion) within the panel area S1 so as not to contact any frame members and bent line portion, as illustrated in FIG. 7A and 7B. This high-rigidity area 74 is also formed by projecting part of the floor panel substantially upward such that its cross section is formed in a dome or upwardly convex shape.

Also, a rectangular high-rigidity area 76 with its four substantially straight sides is formed within the panel area S5. Preferably substantially entire portions of the two sides of the high-rigidity area 76 contact the side sill 20 and the No. 3 cross member 28. The high-rigidity area 76 is formed by projecting part of the floor panel upward, and its sectional shape is substantially trapezoid. To the upper horizontal face of the high-rigidity area 76 are attached legs of a vehicle seat (not illustrated).

Meanwhile, the low-rigidity area 62 are formed in the substantially flat shape within the panel area S1 and S5 so as to at least partly surround the high-rigidity area 70, 74 and 76, and the damping material 68 is provided over or at the low-rigidity area 62, like the panel area S2 of the first embodiment described above. The low-rigidity area 62 at the panel area S1 comprises a substantially L-shaped portion at least partly around the high-rigidity area 70 contacting the bent line portion 52 and the substantially circular portion at least partly surrounding the high-rigidity area 74. The low-rigidity area 62 at the panel area S5 preferably comprises a substantially L-shaped portion at least partly around the high-rigidity area 70 contacting the bent line portion 52 and a substantially L-shaped portion at least partly around the substantially rectangular high-rigidity area 70, preferably being formed in a T shape. The low-rigidity area 62 extends with the specified (predetermined or predeterminable) width so as not to increase its rigidity improperly, as described above at the panel area S2 of the first embodiment.

Next, the vibration reduction structure at the panel area S3 and S7 will be described referring to FIGS. 8A, 8B. As illustrated in FIG. 8A, the panel area S3 and S7 includes the bent line portion 52 commonly, and the panel area S3 is formed by being at least partly enclosed by the bent line portion 52 and the frame members of No. 2 cross member 27, floor side frame 22 and No. 1 tunnel side member 36, as described above. Also, this panel area S7 is formed by being at least partly enclosed by the bent line portion 52 and the frame members of floor side frame 22, No. 1 cross member 36 and No. 3 cross member 28, as described above. Also, these panel area S3 and S7 are formed in the substantially rectangular shape with a pair of straight parallel lines of the No. 2 cross member 27 and the bent line portion 52, another pair of straight parallel lines of the bent line portion 52 and the No. 3 tunnel side member 28, and another pair of substantially straight parallel lines of the floor side frame 22 and the No. 1 tunnel side member 36. Herein, the bent line portion 52 preferably functions as the vibration restraint portion, as described above.

The high-rigidity area 70 having the substantially rectangular shape and extending substantially in the longitudinal direction LD preferably over the substantially entire area of the panel area S3 is formed at the panel area S3 and S7. The two sides of the high-rigidity area 70, as boundary lines a with the low-rigidity area 62 which will be described below, are formed so as to extend substantially straight substantially in the longitudinal direction LD, with their terminal ends being formed circularly. The high-rigidity area 70 is located at an intermediate portion (preferably substantially at or near the middle portion) of the bent line portion 52, and the two substantially straight-extending sides contact the bent line portion 52, respectively. Also, the high-rigidity area 70 includes a plurality of reinforcing beads 73 which extend in the vehicle width direction WD so as to reach the low-rigidity area 62 located at both sides, which will be described below.

The high-rigidity area 70 is formed by projecting part of the floor panel substantially upward between the panel area S3 and S7, as illustrated in FIG. 8B, such that its cross section is formed in a dome or upwardly convex shape. Next, a circular high-rigidity area 78 is formed at the approximately central portion within the panel area S7 so as to extend to the intermediate portion (preferably substantially to or near the approximately central portion) of the panel area, having its one end portion contacting the No. 3 cross member 28, as illustrated in FIG. 8A and 8B. The two sides of the high-rigidity area 78, as boundary lines a with the low-rigidity area 62, are formed so as to extend straight in the longitudinal direction LD, with their terminal ends being formed circularly. This high-rigidity area 78 is also formed by projecting part of the floor panel substantially upward such that its cross section is formed in a dome shape.

Meanwhile, the low-rigidity area 62 are formed in the substantially flat shape within the panel area S3 and S7 so as to at least partly surround the high-rigidity area 70 and 78, and the damping material 68 is provided over the low-rigidity area 62, like the panel area S2 of the first embodiment described above. The low-rigidity area 62 at the panel area S3 comprises portions extending substantially straight at both sides of the high-rigidity area 70 contacting the bent line portion 52. The low-rigidity area 62 at the panel area S7 preferably comprises a reverse substantially U-shaped portion around the high-rigidity area 70 contacting the bent line portion 52 and a substantially U-shaped portion around the high-rigidity area 78 contacting the No. 3 cross member 28, being formed substantially in a H shape. The low-rigidity area 62 extends with the specified (predetermined or predeterminable) width, as described above at the panel area S2 of the first embodiment.

Next, the panel area S6 preferably is formed in the substantially rectangular shape like the panel area S7 as illustrated in FIG. 1 (see FIG. 8A and 8B). Within the panel area S6 is formed the substantially same high-rigidity area 79 as the substantially rectangular high-rigidity area 76 at the panel area S5, such that its two straight sides contact the No. 3 cross member 28 and the No. 1 tunnel side member 36 and the flat low-rigidity area 62 extends at least partly around it substantially in a L shape. Also, this low-rigidity area 62 extends with the specified (predetermined or predeterminable) width, like the above-described panel area S2 of the first embodiment, and the damping material 68 is pasted at least partly over or to the area of this panel area.

Next, the vibration reduction structure at the panel area S4 and S8 will be described referring to FIGS. 9A, 9B. As illustrated in FIG. 9A, the panel area S4 and S8 are formed in the same way as the above-described panel area S1 and S5, and includes the bent line portion 52 commonly, and these panel area S4 and S8 are formed in the substantially rectangular shape by being enclosed by the frame members 20, 22, 27, 28 and the bent line portion 52.

The high-rigidity area 70 preferably having the substantially rectangular shape is formed at the panel area S4 and S8 so as to extend over these area. The four sides of the high-rigidity area 70, as boundary lines a with the low-rigidity area 62, are formed so as to extend substantially straight with slightly curved lines. The high-rigidity area 70 is located at an intermediate portion (preferably substantially at the middle portion) of the bent line portion 52, and part of the two straight sides extending longitudinally contact the bent line portion 52, respectively. Also, the high-rigidity area 70 includes a plurality of reinforcing beads 73 which extend in the longitudinal direction LD so as to reach the panel area S4 and S8.

The high-rigidity area 70 is formed by projecting part of the floor panel upward between the panel area S4 and S8, as illustrated in FIG. 9B, such that its cross section is formed in a dome or upwardly convex shape.

Next, the substantially circular or elliptic or round high-rigidity area 74 is formed (preferably at or near the approximately central portion) within the panel area S4 so as not to contact the frame members 20, 22, 27 and the bent line portion 52, as illustrated in FIG. 9A and 9B. This high-rigidity area 74 is also formed by projecting part of the floor panel upward such that its cross section is formed in a dome or upwardly convex shape.

Also, the rectangular high-rigidity area 76 with its four substantially straight sides is formed within the panel area S8. Entire portion of the one side of the high-rigidity area 76 contacts the No. 3 cross member 28. The high-rigidity area 76 is formed by projecting part of the floor panel substantially upward, and its sectional shape is substantially trapezoid. To the upper horizontal face of the high-rigidity area 76 are attached legs of a vehicle seat (not illustrated).

Meanwhile, the low-rigidity area 62 are formed in the substantially flat shape within the panel area S4 and S8 so as to at least partly surround the high-rigidity area 70, 74 and 76, and the damping material 68 is provided over the low-rigidity area 62, like the panel area S2 of the first embodiment described above. The low-rigidity area 62 at the panel area S4 comprises a substantially U-shaped portion extending at least partly around the high-rigidity area 70 contacting the bent line portion 52 and a portion at least partly surrounding the circular high-rigidity area 74, being formed in A shape. The low-rigidity area 62 at the panel area S8 comprises a reverse substantially U-shaped portion around the high-rigidity area 70 contacting the bent line portion 52 and a substantially U-shaped portion around the high-rigidity area 76 contacting the No. 3 cross member 28, preferably being formed in a substantially H shape. The low-rigidity area 62 extends with the specified (predetermined or predeterminable) width, as described above at the panel area S2 of the first embodiment.

Next, the vibration reduction structure at the panel area S11 will be described referring to FIGS. 10A, 10B. As illustrated in FIG. 10A, the panel area S11 is formed in the same or similar way as the above-described panel area S10 of the first embodiment (see FIGS. 3A, 3B), and formed in the substantially rectangular shape by being enclosed by the frame members of No. 3 cross member 28 and No. 4 cross member 29, the bent line portion 54 extending substantially straight at the edge portion of the floor tunnel portion 50, and the bead 56 extending substantially straight along the curved portion 22a of the floor side frame 22. The bent line portion 54 and the bead 56 function as the preferred vibration restraint portion to control the vibration area of the panel area S11.

The high-rigidity area 70 having the substantially rectangular shape and the low-rigidity area 62 extending substantially in a L shape at least partly around the high-rigidity area 70 are formed within the panel area S11. The low-rigidity area 62 extends with the specified (predetermined or predeterminable) width, as described above at the panel area S2 of the first embodiment. The high-rigidity area 70 has substantially straight sides with slightly curved lines. Also, the high-rigidity area 70 extends to the approximately central portion of the panel area S2, having its one inside side whose center or intermediate portion contacts the bent line portion 54 and its one rear side whose center or intermediate portion contacts the No. 4 cross member 29. Herein, the No. 4 cross member 29 is formed so as to have the small amount of vibration transmitted, as described above. The high-rigidity area 70 includes one or more, preferably a plurality of reinforcing beads 73 which extend substantially radially or in a diverging manner from the No. 4 cross member 29 and the bent line portion 54 toward the low-rigidity area 62.

The high-rigidity area 70 is formed by projecting part of the floor panel downward as illustrated in FIG. 10B, such that its cross section is formed in the dome or upwardly convex shape. Herein, the high-rigidity area 70 may be formed by projecting part of the floor panel upward. Meanwhile, the low-rigidity area 62 are formed in the substantially flat shape, and the damping material 68 is provided at least partly over or at the low-rigidity area 62, like the panel area S2 of the first embodiment described above.

Next, the vibration reduction structure at the panel area S15 and S16 will be described referring to FIGS. 1 and 11 A, 11 B. The respective structure and shape of the panel area S15 and S16 and their basic vibration reduction structure are similar or the same, and therefore the panel area S15 will be described mainly. As illustrated in FIGS. 1 and 11A, the panel area S15 (S16) is formed, as described above, so as to be at least partly enclosed by the frame members of floor side frame 22, No. 2 tunnel member 37 and No. 5 cross member 30, and the bead 56. Also, the panel area S15 is formed in the substantially rectangular shape by the substantially straight-extending frames members 22 and 37 and a pair of substantially parallel straight-extending frame member 30 and bead 58. Particularly, like the panel area S13 and S14, the floor side frame 22 bends at the connecting portions 29a and 30a with the No. 4 cross member 29 and the No. 5 cross member 30, respectively, so as to provide the substantially straight portion forming the panel area S15 (S16). The bead 58 functions as the vibration restraint portion to control the vibration area, as described above at the panel area S13 of the first embodiment.

The high-rigidity area 70 having the substantially rectangular shape and the low-rigidity area 62 extending in a substantially U shape around the high-rigidity area 70 are formed within the panel area S15 (S16). The high-rigidity area 70 has two sides extending in the vehicle width direction WD, which curve slightly outward. One of the two sides contacts the No. 5 cross member 30 at an approximately central portion thereof. The other two sides of the high-rigidity area 70 extend substantially straight in the longitudinal direction LD. The low-rigidity area 62 extends with the specified (predetermined or predeterminable) width, as described above at the panel area S2 of the first embodiment.

The high-rigidity area 70 includes one or more, preferably a plurality of reinforcing beads 73 which extend from the No. 5 cross member 30 toward the low-rigidity area 62. Specifically, the reinforcing beads 73 at the panel area S15 extend substantially longitudinally from the side contacting the No. 5 cross member 30 to the opposite side at the side of the low-rigidity area 62. The reinforcing beads 73 at the panel area S16, as illustrated in FIG. 1, extend radially (or divergingly with respect to each other) from the intermediate or central portion contacting the No. 5 cross member 30 toward the remaining three sides at the side of the low-rigidity area 62.

Herein, the No. 5 cross member 30 contacting the high-rigidity area 70 is formed, like the above-described No. 4 cross member 29, such that its connecting portion 30a with the floor side frame 22 has a smaller rigidity than other cross members. Thus, the amount of vibration transmitted from the engine 40 and the suspensions 44 and 48 to the No. 5 cross member 30 via the floor side frame 22 is reduced. Also, since dimensions of the sections of the No. 5 cross member 30 are set so as to be smaller than those of the No. 3 and No. 4 cross members 28 and 29, the No. 5 cross member 30 itself has a smaller amount of transmitted vibration.

The high-rigidity area 70 is formed by projecting part of the floor panel downward as illustrated in FIG. 11B, such that its cross section is formed in the dome shape or convex. Herein, the high-rigidity area 70 may be formed by projecting part of the floor panel substantially upward. Meanwhile, the low-rigidity area 62 are formed in the substantially flat shape, and the damping material 68 is provided over the low-rigidity area 62, like the panel area S2 of the first embodiment described above.

Next, function and effect of the floor panel structure according to the second embodiment will be described. At the panel area S1, S3 through S8, S11, S15 and S16 according to the floor panel structure of the present embodiment, like the first embodiment, the vibration energy is increased at the low-rigidity area 62 due to the difference in rigidity between the high-rigidity area 70 and the low-rigidity area 62 formed around the high-rigidity area 70.

Further, since part of or the entire high-rigidity area 70 contacts the frame members 20, 22, 27 through 30, 36, 37 and/or the bent line portions 52 of the vibration restraint portion, the rigidity of the high-rigidity area 70 can be increased greatly. Accordingly, even if the panel area was small and had a relatively high rigidity, the rigidity of the high-rigidity area 70 could be increased by having the high-rigidity area 70 contact the frame members 20, 22, 27 through 30, 36, 37 and/or the bent line portions 52 of the vibration restraint portion. Thus, the difference in weight between the high-rigidity area 70 and the low-rigidity area 62 could be larger, so that the vibration energy could be further increased at the low-rigidity area 62.

Accordingly, the vibration energy being properly increased at the low-rigidity area 62 is transformed to the thermal energy by the damping effect of the floor panel, preferably of the steel plate forming the floor panel. Thus, the vibration energy at the panel area is reduced, and thereby the acoustic emission generated from the panel area is reduced.

Further, since the damping material 68 is provided at the low-rigidity area 62, the vibration energy being increased at the low-rigidity area 62 is further reduced. Particularly, since the damping material 68 is configured such that the total rigidity of the damping material 68 and the low-rigidity area 62 is smaller than the rigidity of the high-rigidity area 70, the vibration energy can be reduced properly at the low-rigidity area 62.

Next, the function and effect of the disposition of the high-rigidity area 70 and the low-rigidity area 62 provided at least partly around the high-rigidity area 70 will be described. First, the function and effect of the panel area S1 and S5, S3 and S7, S4 and S8 will be described. Since the panel area S1 and S5, S3 and S7, S4 and S8 of the present embodiment include the straight-bent high-rigidity bent line portion 52 commonly and the high-rigidity area 70 is formed over these two area, contacting the bent line portion, the difference in rigidity between the both area 70 and 62 can be made larger by increasing the rigidity of the high-rigidity area 70 greatly. Particularly, since the high-rigidity area 70 is formed projecting substantially upward respectively between the panel area S1 and S5, S3 and S7, S4 and S8, the rigidity of the high-rigidity area 70 can be enhanced.

Further, since the high-rigidity area 70 at the panel area S1 and S5 contacts the bent line portion 52 at its one side and contacts the side sill 20 at its another side, and the high-rigidity area 70 at the panel area S3 and S7, S4 and S8 contacts the bent line portion 52 at their two sides respectively, the rigidity of the high-rigidity area 70 can be increased, thereby enhancing the difference in rigidity surely.

Also, since the high-rigidity area 70 at the panel area S1 and S5 is formed in the substantially rectangular shape and located at the end portion of the bent line portion 52, the low-rigidity area 62 at the panel area S1 and S5 includes the L-shaped portion around the high-rigidity area 70, thereby increasing the vibration energy particularly at a portion illustrated by reference character E1 in FIG. 7A.

The high-rigidity area 70 at the panel area S3 and S7 extends in the longitudinal direction LD over the two area S3 and S7 and located at the middle portion of the bent line portion 52, and it further extends longitudinally over the almost entire area of the panel area S3. Accordingly, the low-rigidity area 62 at the panel area S3 includes the straight-extending portions at the both sides of the high-rigidity area 70, and the low-rigidity area 62 at the panel area S7 includes the U-shaped portion around the end portion of the high-rigidity area 70. Thus, the vibration energy can be increased at a portion illustrated by reference character E1 in FIG. 8A.

Since the high-rigidity area 70 at the panel area S4 and S8 is formed in the substantially rectangular shape and located at the intermediate or middle portion of the bent line portion 52, the low-rigidity area 62 at the panel area S4 and S8 includes the substantially U-shaped portion at least partly around the high-rigidity area 70, thereby increasing the vibration energy particularly at a portion illustrated by reference character E1 in FIG. 9A. Since these substantially L-shaped, U-shaped and/or straight extending portions of the low-rigidity area 62 at respective panel area S1 and S4, S3 and S7, S4 and S8 are provided with the specified (predetermined or predeterminable) width so as not to increase the rigidity thereof improperly, the above-described increasing of vibration energy at the portion of E1 can be attained surely.

Next, the substantially circular or round or elliptic high-rigidity area 74 and the rectangular high-rigidity area 76 are formed and the low-rigidity area 62 extending in the substantially L shape and/or at least partly surrounding the circular high-rigidity area 74 are formed at the panel area S1 and S5. Accordingly, the vibration energy can be increased particularly at a portion illustrated by reference character E2 in FIG. 7A. Also, since the high-rigidity area 78 and the low-rigidity area 62 in the substantially U shape are formed within the panel area S7, the vibration energy can be increased particularly at a portion illustrated by reference character E2 in FIG. 8A. Also, since the circular high-rigidity area 74 and the rectangular high-rigidity area 76, and the low-rigidity area 62 extending in the substantially U shape and/or at least partly surrounding the circular high-rigidity area 74 are formed within the panel area S4 and S8, the vibration energy can be increased particularly at a portion illustrated by reference character E2 in FIG. 9A.

Next, the function and effect of the panel area S6 and S11 will be described. The preferably substantially entire portions of the two sides of the rectangular high-rigidity area 76 at the panel area S6 contact the No. 3 cross member 28 and the No. 1 tunnel side member 36. One side of the substantially rectangular high-rigidity area 70 at the panel area S11 contacts the bent line portion 54, and another side thereof contacts the No. 4 cross member 29. Accordingly, the difference in rigidity between the high-rigidity area 70 and the low-rigidity area 62 can be increased by enhancing the rigidity of the high-rigidity area 70.

Since the high-rigidity area 70 at the panel area S6 and S11 is formed in the substantially rectangular shape such that its adjacent sides contact the frame members 28, 29, 36 or the bent line portion 54 of the vibration restraint portion respectively, the low-rigidity area 62 includes the substantially L-shaped portion at least partly around the high-rigidity area 70, and thereby the vibration energy can be increased particularly at a portion illustrated by reference character E in FIG. 10A. Further, since this substantially L-shaped portion extends with the specified (predetermined or predeterminable) width, like the panel area S1 and S5, the above-described increasing of vibration energy at the portion E can be attained surely. Also, since the high-rigidity area 70 at the panel area S11 extends to or near the approximately central portion of the panel area S11, the difference in rigidity between the both area 70 and 62 can be increased, as described above for the first embodiment. Also, the substantially L-shaped portion of the low-rigidity area 62 can be formed properly, and thereby the increasing of vibration energy can be attained surely.

Herein, as described above, the No. 4 cross member 29 is configured such that the connecting rigidity at its connection portion 29a with the floor side frame 22 is relatively small compared to other cross members, and the rigidity of the bent line portion 54 formed at the edge portion of the floor tunnel portion 50 is not so great as the frame member. Accordingly, the amount of vibration transmitted to the No. 4 cross member 29 is small. Since the high-rigidity area 60 contacts this No. 4 cross member 29 and the bent line portion 29 at the panel area S11, the large vibration can be prevented from being transmitted to the high-rigidity area 70. As a result, the acoustic emission generated by the vibration being transmitted directly to the high-rigidity area 70 and the vibration being transmitted to the low-rigidity area 62 via the high-rigidity area 70 can be suppressed properly.

Next, the function and effect of the panel area S5 and S16 will be described. Since the one side the high-rigidity area 70 at the panel area S5 and S16 contact the No. 5 cross member 30 respectively, the difference in rigidity between the high-rigidity area 70 and the low-rigidity area 62 can be increased by enhancing the rigidity of the high-rigidity area 70.

Also, since the high-rigidity area 70 at the panel area S5 and S16 is formed in the substantially rectangular shape and located at the intermediate or middle portion of the area in the vehicle width direction WD, the low-rigidity area 62 includes the U-shaped portion around the high-rigidity area 70, and thereby the vibration energy can be increased particularly at a portion illustrated by reference character E in FIG. 11A. Further, since this U-shaped portion extends with the specified width, the above-described increasing of vibration energy at the portion E can be attained surely.

Also, since the high-rigidity area 70 at the panel area S15 and S16 extends to or near the approximately central portion of the panel area S15 and S16, the difference in rigidity between the both area 70 and 62 can be increased, as described above for the first embodiment. Also, the substantially U-shaped portion of the low-rigidity area 62 can be formed properly, and thereby the increasing of vibration energy can be attained surely.

Herein, as described above, the No. 5 cross member 30 is configured such that the connecting rigidity at its connection portion 30a with the floor side frame 22 is relatively small compared to other cross members, and dimensions of the sections of the No. 5 cross member 30 are set so as to be smaller than those of the No. 3 and No. 4 cross members 28 and 29. Thus, the amount of transmitted vibration is made small. Since the high-rigidity area 70 contacts this No. 5 cross member 30 at the panel area S15 and S16 according to the present embodiment, the large vibration can be prevented from being transmitted to the high-rigidity area 70. As a result, the acoustic emission generated by the vibration being transmitted directly to the high-rigidity area 70 and the vibration being transmitted to the low-rigidity area 62 via the high-rigidity area 70 can be suppressed properly.

Next, function and effect of the shape of the high-rigidity area 70 will be described. Since the boundary lines a of respective sides of the high-rigidity area 70 formed over or at the panel area S1 and S5, S4 and S8 or formed at the panel area S11 extend substantially straight, the area of E at which the vibration energy is particularly increased can be ensured properly, without increasing the rigidity of the low-rigidity area 62. As a result, the vibration reduction effect can be attained surely.

Also, since the two laterally-extending sides of the high-rigidity area 70 at the panel area S3 and S7 are substantially straight, the vibration energy can be increased at the portion E including the boundary lines a between the high-rigidity area 70 and the two straight portions of the low-rigidity area 62 located at the both sides. Likewise, since the boundary lines a at the panel area S6 extend substantially straight, the vibration energy can be increased at the portion E including the boundary lines a between the high-rigidity area 70 and the two substantially straight portions of the low-rigidity area 62 located at the both sides.

Also, since the two laterally-extending sides of the high-rigidity area 70 at the panel area S15 and S16 are curved, the rigidity of the high-rigidity area 70 is increased. Meanwhile, since the remaining two sides of the high-rigidity area 70 are substantially straight, the area of E at which the vibration energy is particularly increased can be ensured properly, without increasing the rigidity of the low-rigidity area 62. As a result, the vibration reduction effect can be attained surely.

Also, since the high-rigidity area 70 is formed in the curved line so as to contact the No. 5 cross member 30 at the intermediate or central portion of its one side, there occurs small area illustrated by reference character G in FIG. 11A between them. The small area G can prevent the portion illustrated by reference character X in FIG. 11A, which is located near the No. 5 cross member 30, from increasing its rigidity improperly. Thus, the area of E at which the vibration energy is increased can be ensured properly, and the vibration reduction effect can be attained surely.

Also, providing the high-rigidity area 70 with the two curved sides can facilitate the positioning of the damping material 68 at the low-rigidity area 62 including the boundary lines a, as described above for the first embodiment, and improve the accuracy of the press forming of the high-rigidity area 70.

Next, function and effect of the frame members and the vibration restraint portions which form the respective panel area will be described. In the present embodiment, the respective portions of the frame members 20, 22, 27 through 30, 36, 37, and the bent line portions 52, 54, and the beads 56, 58, as the vibration restraint portions, which form the panel area S1, S3 through S8, S11, S15, S16 are formed so as to extend substantially straight. Accordingly, the difference in rigidity between the high-rigidity area 70 and the low-rigidity area 62 can be ensured without increasing the rigidity of the low-rigidity area 62. Also, since the panel area S1, S3 through S8 are formed in the rectangular shape and the panel area S11, S15 and S16 are formed in the substantially rectangular with a pair of substantially parallel sides, the entire rigidity of the respective panel area is prevented from increasing and thereby the effect of the vibration reduction effect can be ensured properly.

Particularly, the substantially straight bead 56 as the vibration restraint portion is formed along the curved portion 22a of the floor side frame 22 at the panel area S11, like the panel area S11. The floor side frame 22 at the panel area S15 and S16 is bent at the connecting portion 29a with the No. 4 cross member 29 and at the connecting portion 30a with the No. 5 cross member 30, respectively. Thus, the portions forming these panel area S15 and S16 are formed so as to extend substantially straight.

Next, function and effect of the reinforcing bead 73 formed at the respective high-rigidity area 70 will be described. First, since the respective high-rigidity area 70 at the panel area S1 and S5, S4 and S8 includes the one or more, preferably plural reinforcing beads 73 extending in the longitudinal direction LD over the respective area, the longitudinal-direction rigidity of the high-rigidity area 70 can be increased, in addition to the rigidity increasing by the high-rigidity area 70 contacting the bent line portion 52. As a result, the difference in rigidity between the high-rigidity area 70 and the low-rigidity area 62 extending around the front side and the rear side of the high-rigidity area 70 can be increased. Accordingly, the vibration energy can be particularly increased at, for example, a portion F in the area E1 of FIGS. 7A and 9A.

Also, since the high-rigidity area 70 at the panel area S3 and S7 includes the plural reinforcing beads 73 extending substantially in the vehicle width direction WD so as to connect the both two straight portions of the low-rigidity area 62, the lateral-direction rigidity of the high-rigidity area 70 can be increased, in addition to the rigidity increasing by the high-rigidity area 70 contacting the bent line portion 52. As a result, the difference in rigidity between the high-rigidity area 70 and the two substantially straight-extending portions of the low-rigidity area 62 can be further increased.

Also, since the high-rigidity area 70 at the panel area S11 includes the plural reinforcing beads 73 which radially or divergingly extend from the No. 4 cross member 29 contacting the high-rigidity area 70 and the bent line portion 54 toward the low-rigidity portion 62, the bead-extending-direction rigidity of the high-rigidity area 70 can be further increased. Since the reinforcing beads 73 extend preferably over the almost entire portion of substantially L-shaped portion of the low-rigidity area 62, the difference in rigidity between the high-rigidity area 70 and the L-shaped portion of the low-rigidity area 62 can be further increased.

Also, the respective high-rigidity area 70 at the panel area S15 and S16 includes the plural reinforcing beads 73 extending from the No. 5 cross member 30 contacting the high-rigidity area 70 toward the low-rigidity portion 62. Specifically, since the reinforcing beads 73 formed at the panel area S15 extend substantially longitudinally from its side contacting the No. 5 cross member 30 to the opposite side at the low-rigidity area 62, the longitudinal-direction rigidity of the high-rigidity area 70 is increased. Also, since the reinforcing beads 73 at the panel area S16 extend radially or divergingly from the central or intermediate portion of the side contacting the No. 5 cross member 30 toward the remaining three sides at the low-rigidity area 62, the bead-extending-direction rigidity of the high-rigidity area 70 can be increased. As a result, the difference in rigidity between the high-rigidity area 70 and the rear portion of the low-rigidity area 62, which is located at the opposite side of the No. 5 cross member, at the panel area S15 can be increased. Accordingly, the vibration energy can be particularly increased at, for example, the portion F in the area E of FIG. 11A. Also, since the reinforcing beads 73 extend over the almost entire portion of substantially U-shaped portion of the low-rigidity area 62 at the panel area S16, the difference in rigidity between the high-rigidity area 70 and the substantially U-shaped portion of the low-rigidity area 62 can be further increased.

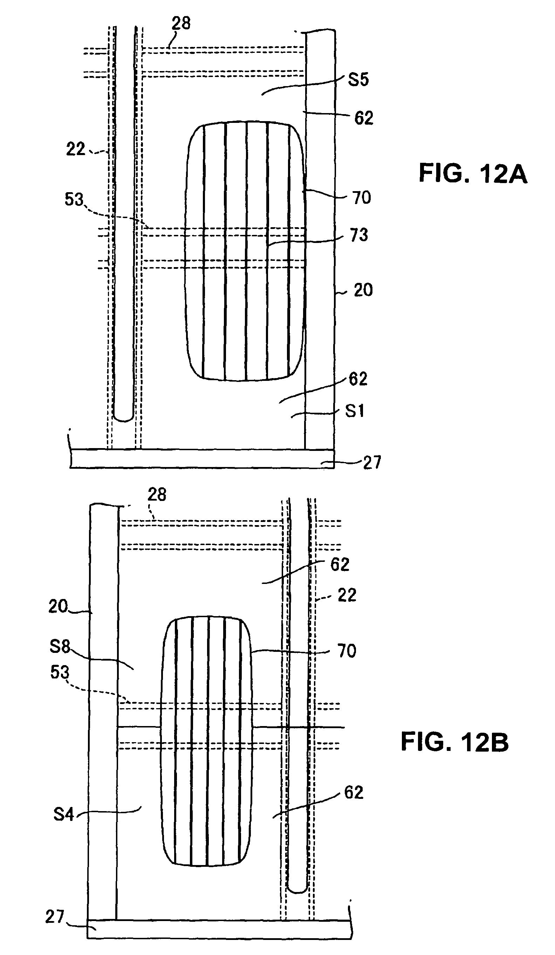

Herein, in the case where the frame member 53 is provided at the bent line portion 52 formed at the first floor panel 2 as illustrated in FIGS. 12A and 12B, the high-rigidity area 70 may be located so as to contact the frame member 53. In this case, the same or similar function as that described above can be obtained. Also, as illustrated in FIGS. 12A and 12B, the high-rigidity area 70 extending over the two area may be located so as to extend to or near the approximately central portion thereof. In this case, as described for the first embodiment, sine the high-rigidity area 70 extends to the approximately central portion of the relatively low-rigidity panel area, the difference in rigidity between the high-rigidity area 70 and the low-rigidity area 62 can be further increased. Herein, only the high-rigidity area 70 at the one panel area may be located so as to extend to the approximately central portion thereof.

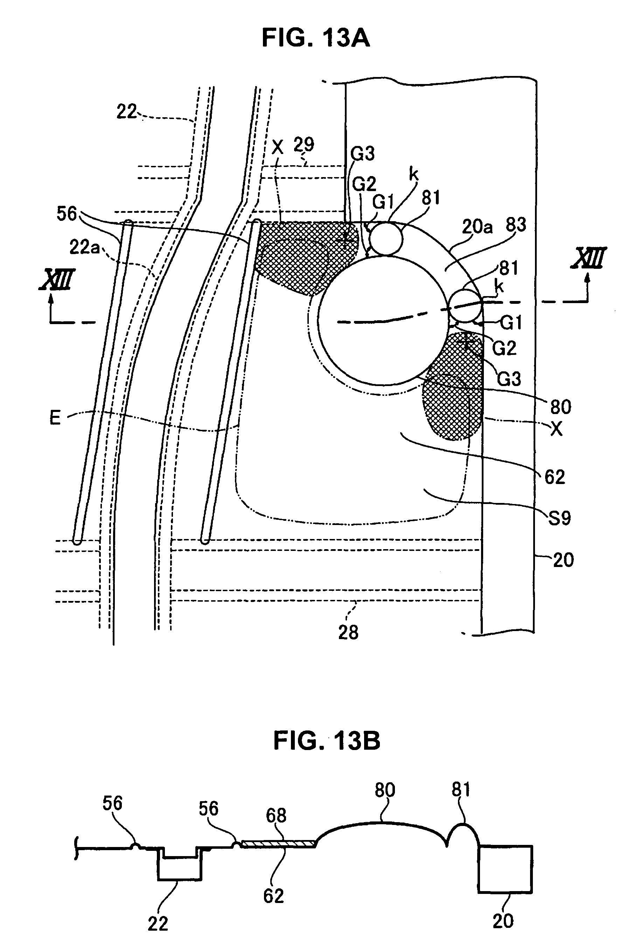

Next, the floor panel structure of the vehicle body according to the third preferred embodiment will be described specifically referring to FIGS. 1 and 13A, 13B. In the third embodiment, the high-rigidity area and the low-rigidity area are provided at the panel area S9 and S12 as the vibration reduction structure, and the shape and disposition of the high-rigidity area is configured so as to ensure the effect of vibration reduction surely. Since the panel area S9 and S12 have basically the similar or same structure, the panel area S9 will be described mainly. FIG. 13A is an enlarged plan view of the panel area S9 according to the second embodiment, and FIG. 13B is a sectional view taken along line XIII-XIII of FIG. 13A, illustrating a sectional structure of the panel area S9 in the longitudinal direction LD of the vehicle.

As illustrated in FIGS. 1 and 13A, the panel area S9 (S12) is formed by being enclosed by the frame members of side sill 20, No. 3 cross member 28, No. 4 cross member 29 and the bead 56 formed along the curved portion 22a of the floor side frame 22. The No. 3 cross member 28 and the No. 4 cross member 29 extend straight in parallel to each other and the bead 56 of the vibration restraint portion extends straight at the panel area S9 (S12). Also, the side sill 20 curves from the approximately middle portion of the No. 3 cross member 28 and the No. 4 cross member 29 toward the No. 4 cross member 29, and thus the area S9 (S12) is formed in the substantially rectangular shape such that two sides include a curved portion 22a between them.

Within the panel area S9 (S12) are formed a circular first high-rigidity area 80 located at an intermediate portion (preferably substantially at the center) of the panel area S9 (S12), two circular second high-rigidity area 81, a substantially flat portion 83 located between the two second high-rigidity area 81, and the low-rigidity area 62 extending at least partly around the first and second high-rigidity area 80, 81. Herein, the curved portion 20a has a smallest radius of curvature at two portions denoted by reference character k in FIG. 13A, and two second high-rigidity area 81 are formed between the portions k with the smallest radius of curvature and the first high-rigidity area 80. Also, these two second high-rigidity area 81 have a smaller area than the first high-rigidity area 80, and are located near the curved portion 20a (including contacting it). In the present embodiment, the second high-rigidity area 81 contacts the curved portion 20a and the first high-rigidity area 80. Herein, second high-rigidity area 81 may be located near the curved portion 20a or the first high-rigidity area 80 without contacting them.

The first and second high-rigidity area 80 and 81 are formed by projecting part of the floor panel downward as illustrated in FIG. 13B, such that its cross section is formed in the dome or convex shape. Meanwhile, the low-rigidity area 62 are formed in the substantially flat shape, and the damping material 68 is at least partly provided over or at the low-rigidity area 62, like the panel area S2 of the first embodiment described above.

Next, function and effect of the floor panel structure according to the third embodiment will be described. At the panel area S9 and S12 according to the floor panel structure of the present embodiment, like the first embodiment, the vibration energy is increased at the low-rigidity area 62 due to the difference in rigidity between the high-rigidity area 80 and 81 and the low-rigidity area 62 formed around the high-rigidity area 80 and 81.

Further, since the high-rigidity area 81 is formed near (including contacting) the curved portion 20a of the two sides of the panel area S9 and S12, the rigidity thereof is increased greatly and thereby the difference in rigidity between the high-rigidity area 81 and the low-rigidity area 62 can be larger. Namely, in the case where the frame member includes the curved portion 20a and the curved portion 20a is provided within the panel area S9 and S12, the rigidity of the panel area near the curved portion 20a is increased. Thus, the rigidity of the high-rigidity area 81 located that portion can be increased greatly.

Accordingly, the vibration energy being properly increased at the low-rigidity area 62 is transformed to the thermal energy by the damping effect of the steel plate forming the floor panel. Thus, the vibration energy at the panel area is reduced, and thereby the acoustic emission generated from the panel area is reduced.

Further, since the damping material 68 is at least partly provided at or near the low-rigidity area 62, like the first embodiment and the damping material 68 is configured such that the total rigidity of the damping material 68 and the low-rigidity area 62 is smaller than the rigidity of the high-rigidity area 80 and 81, the vibration energy can be reduced properly at the low-rigidity area 62.

Next, the function and effect of the disposition of the high-rigidity area 80 and 81 and the low-rigidity area 62 provided at least partly around the high-rigidity area 80 and 81 will be described. Since the high-rigidity area 80 and 81 are formed so as to extend from the curved portion 20a to or near the approximately central portion at the panel area S9 and S12 of the present embodiment, the vibration energy can be increased surely at the low-rigidity area 62 around the high-rigidity area 80 and 81 and thereby the difference in rigidity between the both area can be made larger, as described above for the first embodiment. As a result, the vibration energy can be further increased particularly at the portion E in FIG. 13A.

Further, since the second high-rigidity area 81 is formed in the circular shape and near the curbed portion 20a, there occurs portions G1 formed between the second high-rigidity area and the curved portion 20a, as illustrated in FIG. 13A. These portions G1 can prevent the rigidity of the low-rigidity area 62 from being increased at the portion near the portions G1. Specifically, the rigidity of portions denoted by reference character X in FIG. 13A can be prevented from being increased. As a result, the effect of vibration reduction can be ensured, without limiting the area of the portions E improperly at which the vibration energy is increased.

Also, likewise, since the first and second high-rigidity area 80 and 81 are formed in the circular shape respectively and contact each other, there occurs portions G2 formed at least partly between the first and second high-rigidity area 80 and 81. These portions G2 can prevent the rigidity of the near portions from being increased. Thus, the rigidity of portions denoted by reference character X in the figure can be prevented from being increased. As a result, the effect of vibration reduction can be ensured, without limiting the area of the portions E improperly at which the vibration energy is increased.

Also, since the second high-rigidity area 81 has the smaller area than the first high-rigidity area 80, a larger area of the low-rigidity area 62 can be ensured around the second high-rigidity 81. Specifically, the larger area of the portions G3 can be ensured as the low-rigidity area 62, as illustrated in FIG. 13A. Thus, the rigidity of the portion of low-rigidity area 62 near the second high-rigidity area 81 can be prevented from being increased by the large portions G3, and thereby the rigidity of the portion X in the drawing along with the portions G1 and G2 can be prevented from being increased. As a result, the effect of vibration reduction can be ensured, without limiting the area of the portions E improperly at which the vibration energy is increased. Further, since the first and second high-rigidity portions 80 and 81 are formed in the circular shape, it becomes easy to provide the above-described portions G1 and G2 between the second high-rigidity area 81 and the curved portion 20a or between the respective high-rigidity area 80 and 81. Also, the difference in rigidity between the high-rigidity area 80 and 81 and the low-rigidity area 62 can be greater by increasing the rigidity of the high-rigidity area 80 and 81.

Herein, respective high-rigidity area 80 and 81 may be formed in the oval shape, and any other shape than circle, elliptic, round and/or oval, for example, the substantially rectangular shape may also be adopted as long as there can occur the portion between the second high-rigidity area 81 and the curved portion 20a or between the respective high-rigidity area 80 and 81. Also, the same function and effect as those described above should be obtained even if the second high-rigidity area 81 is slightly away from the curved portion 20a without contacting it. Further, this should be also said in the case where the first and second high-rigidity area 80 and 81 are slightly away from each other.

Also, since two second high-rigidity area 81 are formed and the flat portion 83 is formed between these two second high-rigidity area 81, the panel area S9, S12 as a whole can easily vibrate substantially symmetrically, having a symmetrical line interconnecting the flat portion 83 and the approximately central portion of the area S9, S12. As a result, the vibration energy can be increased effectively at the low-rigidity area 62.

Also, since these two second high-rigidity area 81 are formed between the portion k with the smallest radius of curvature of the curved portion 20a and the first high-rigidity area 80 respectively, the rigidity of the second high-rigidity area 81 can be further increased. As a result, the difference in rigidity between the high-rigidity area 81 and the low-rigidity area 62 can be made greater. Namely, the smaller the radius of curvature of the curved portion 20a is, the greater the rigidity of the panel portion around there becomes. Thus, the rigidity of the second high-rigidity area 81 can be increased by forming the second high-rigidity area 81 at this portion.

Next, function and effect of the frame members and the vibration restraint portions which form the respective panel area will be described. In the present embodiment, the respective portions of the frame members 20, 28, 29 and the bead 56, as the vibration restraint portion, which form the panel area S9 and S12, except the curved portion 20a of the side sill 20, are formed so as to extend substantially straight. Accordingly, the difference in rigidity between the high-rigidity area 80 and 81 and the low-rigidity area 62 can be ensured without increasing the rigidity of the low-rigidity area 62. Particularly, since there is provided the straight bead 56 as the vibration restraint portion extending along the curved area 22a of the floor side frame 22, like the panel area S10, the entire rigidity of the panel area S9 and S12 is prevented from being increased and thereby the effect of the vibration reduction effect can be ensured properly.

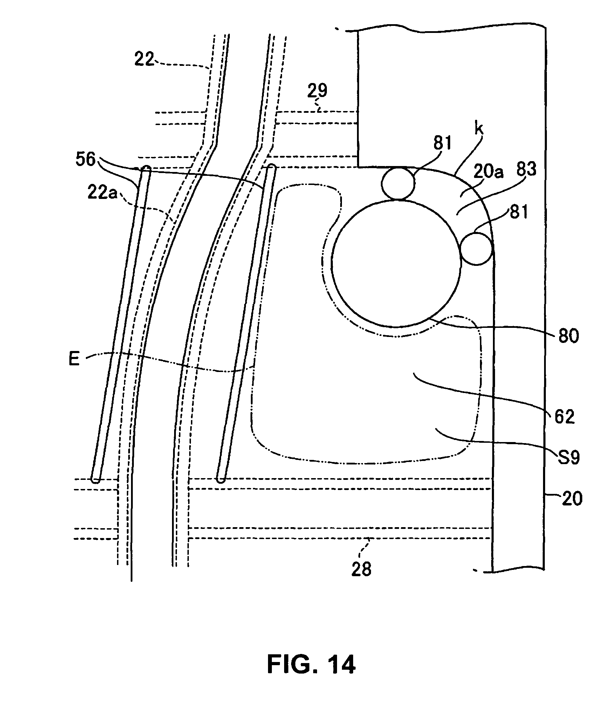

Next, a modified preferred embodiment of the third embodiment will be described referring to FIGS. 14 through 17. For example, in a case, as illustrated in FIG. 14, where there exists only one portion k having the smallest radius of curvature of the curved portion 20a at the panel area S9, the above-described flat portion 83 may be formed between this portion with the smallest radius of curvature and the first high-rigidity area 80. Herein, the same or similar function and effect as those described above can be obtained. Particularly, since the flat area 83 is formed between this portion k and the first high-rigidity area 80, the first and second high-rigidity area 80, 81 and the flat area 83 are disposed between this portion k and the low-rigidity area 62, the rigidity of the low-rigidity area 62 can be prevented from being increased. As a result, the vibration energy can be increased at the low-rigidity area 62 effectively and surely.

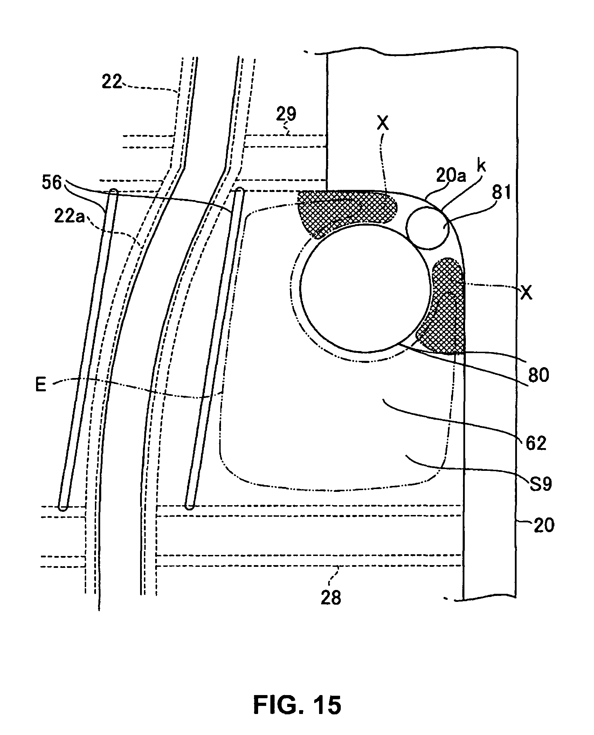

Next, for example, in a case, as illustrated in FIG. 15, where there exists only one portion k having the smallest radius of curvature of the curved portion 20a at the panel area S9, the above-described flat portion 81 with the smaller area may be formed between this portion k with the smallest radius of curvature and the first high-rigidity area 80. Herein, the same function and effect as those described above can be obtained. Particularly, since the area of the second high-rigidity area 81 is smaller than the area of the first high-rigidity area 80, the low-rigidity area 62 can be expanded to the both sides of the second high-rigidity area 81 to enlarge the area of the low-rigidity area 62. As a result, the rigidity of the low-rigidity area 62 near the second high-rigidity area 81 can be prevented from being increased. In the present embodiment, the rigidity of the portion X in FIG. 15 is prevented from being increased, and thus the area E in FIG. 15 can be prevented from being too limited.

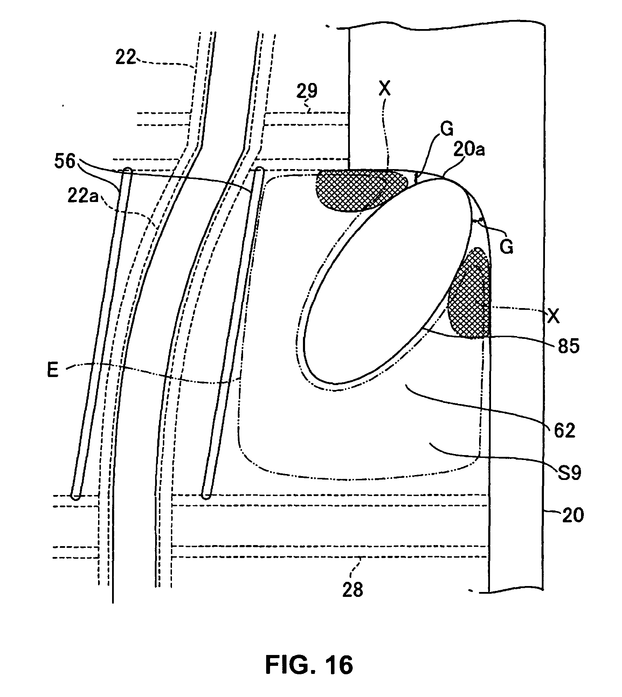

Further, as illustrated in FIG. 16, the single oval or round or ring-shaped high-rigidity area 85 may be formed at the panel area S9 so as to extend from the curved portion 20a to or near the intermediate or approximately central portion. In this case, it is preferable that the oval high-rigidity area 85 is formed such that one end at is longer side is located near (including contacting) the curved portion 20a as described above for the third embodiment. Also, it is preferable that the above-described one end at is longer side is located near the portion with the smallest radius of curvature of the curved portion 20a. In this case, since the oval high-rigidity area 85 is formed at least near the curved portion 20a of the sides of the panel area S9, S12, the similar or same function and effect as those described above can be obtained. Particularly, since the high-rigidity area 85 extends in the oval shape from the curved portion 20a to or near the approximately central portion, there exists a gap illustrated by reference character G in FIG. 16 between the oval high-rigidity area 85 and the curved portion 20a. Thus, as descried above, the rigidity of this gap area can be prevented from being increased. In the present embodiment, the rigidity of the portion X in FIG. 16 is prevented from being increased, and thus the area E in FIG. 16 can be prevented from being too limited.

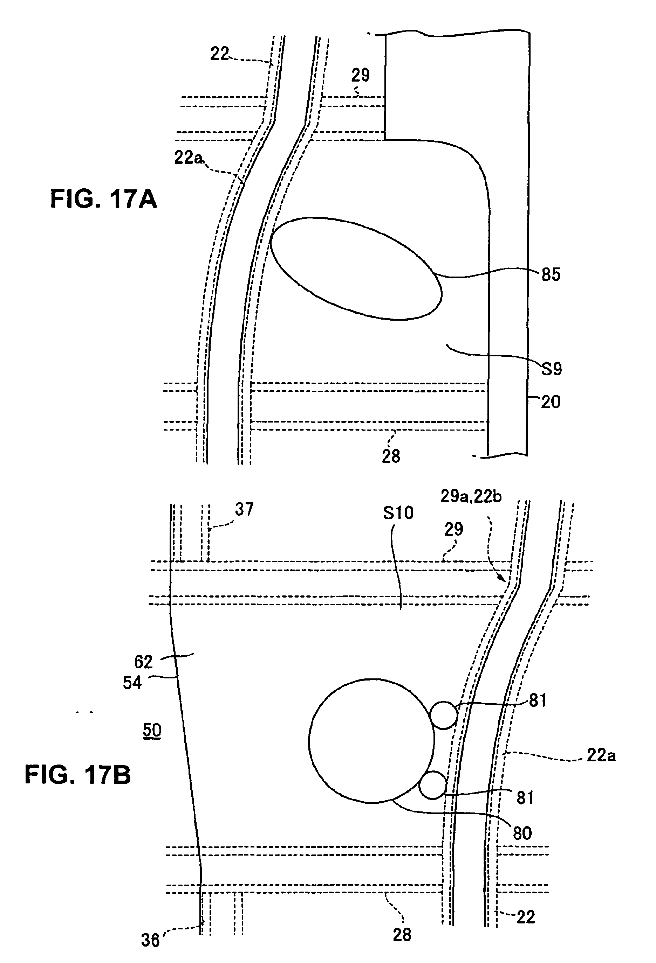

Also, for example, in a case, as illustrated in FIGS. 17A and 17B, no bead is formed straight along the curbed portion 22a of the floor side frame 22 at the panel area S9 and S10, one side of the panel area S9, S10 would be formed by the curved portion 20a. Accordingly, for example, the above-described single oval high-rigidity area 85 may be formed at the panel area S9 as illustrated in FIG. 17A. Also, the above-described first and second high-rigidity area 80 and 81 may be formed at the panel area S10 so as to extend from the curved portion 22a to the approximately central portion as illustrated in FIG. 17B. In these case, the same function as that of the above-described third embodiment and modified embodiment can be obtained as well.

The present invention should not be limited to the above-described embodiments, but any other modifications and improvements may be applied within the scope of the present invention as defined by the claims.

## Claims

1. A floor panel structure for a vehicle body, in which a floor of an automotive vehicle is formed by a floor panel (2; 4; 6; 8) coupled to a plurality of frame members (20; 22; 27 through 30; 36; 37) which extend in substantially longitudinal and width directions of vehicle, comprising:
a panel area (S1 through S16) provided at said floor panel (2; 4; 6; 8), the panel area (S1 through S16) being formed by being enclosed by said frame member (20; 22; 27 through 30; 36; 37) and/or a vibration restraint portion (52; 54; 56; 58) to control a vibration area, the panel area (S1 through S16) being formed in a substantially rectangular shape with sides thereof which extend substantially straight;
a high-rigidity area (60; 70; 74; 76; 78; 79; 80; 81; 85) formed within said panel area (S1 through S16), the high-rigidity area (60; 70; 74; 76; 78; 79; 80; 81; 85) being formed by projecting part of the floor panel upward or downward so as to have a relatively high rigidity; and
a low-rigidity area (62) formed within said panel area, the low-rigidity area (62) having a relatively low rigidity, the low-rigidity area (62) being formed at least partly around said high-rigidity area (60; 70; 74; 76; 78; 79; 80; 81; 85).

2. The floor panel structure for a vehicle body of claim 1, further comprising a damping material (68) which is placed on the floor panel (2; 4; 6; 8) to reduce a panel vibration energy of the floor panel, wherein said damping material (68) is at least partly provided substantially at said low-rigidity area (62).

3. The floor panel structure for a vehicle body of one of the preceding claims, wherein at least one pair of sides of said substantially rectangular panel area (S1 through S16) is formed substantially in parallel.

4. The floor panel structure for a vehicle body of one of the preceding claims, wherein said plural frame members comprise at least a frame member (22) which includes a straight-extending portion and a bent portion (22b; 22c), and said bent portion (22b; 22c) of the frame member (22) is located at a connecting portion (29a; 30a) of the frame member with another frame member (29; 30) such that said straight-extending portion of the frame member (22) constitutes at least one of the straight sides of said substantially rectangular panel area.

5. The floor panel structure for a vehicle body of one of the preceding claims, wherein a plurality of said panel area are provided, and said vibration restraint portion (52; 54; 56; 58) is configured so as to control the vibration area by restraining a vibration linkage between vibration occurring at a specified panel area and vibration occurring at another panel area next to the specified panel area.

6. The floor panel structure for a vehicle body of claim 5, wherein said vibration restraint portion comprises at least one bead (56; 58) which is formed at the floor panel so as to extend substantially straight.

7. The floor panel structure for a vehicle body of claim 6, wherein said plural frame members comprise at least a frame member (22) which includes a curved portion (22a), and said bead (56; 58) is so located inside and along said curved portion (22a) as to constitute at least one of the straight sides of said substantially rectangular panel area.

8. The floor panel structure for a vehicle body of claim 5, 6 or 7, wherein said vibration restraint portion comprises a flange edge portion (22e) of a connecting flange (22d) of the frame member (22), said flange edge portion (22e) being formed so as to extend substantially straight and be fixed to the floor panel.

9. The floor panel structure for a vehicle body of claim 8, wherein said plural frame members comprise at least a frame member (22) which includes a curved portion (22a), and said flange edge portion (22e) of the connecting flange (22d) is so located inside and along said curved portion (22a) as to constitute at least one of the straight sides of said substantially rectangular panel area.

10. The floor panel structure for a vehicle body of one of the preceding claims 5 to 9, wherein said vibration restraint portion comprises a bent line portion (52; 54) of the floor panel, said bent line portion (52; 54) being formed by bending the floor panel with a straight bending line, and said bent line portion (52; 54) of the floor panel constitutes at least one of the straight sides of said substantially rectangular panel area.

11. A vehicle body comprising a floor panel structure according to one of the preceding claims.
